# EUROPEAN PATENT APPLICATION

(11) **EP 4 789 922 A1**
(43) Date of publication of application: **12.08.2026**
(21) Application number: 25156846.5
(22) Date of filing: 10.02.2025
(51) Int. Cl.: B60R 9/058

(54) **MOUNTING ARRANGEMENT**

(71) Applicant: Thule Sweden AB, 335 04 Hillerstorp (SE)
(72) Inventor: FERMAN, Magnus, 33504 c/o TSAB, Hillerstorp (SE); KVARNVIK, Gustaf, 33504 c/o TSAB Hillerstorp (SE)
(74) Representative: Wallentin, Lars

(57) **Abstract**

Disclosed is a mounting arrangement (100, 200) comprising a base (102) and an engaging portion (152) configured to engage with an engaging section (26, 28) of a roof rack (20), for example an abutment surface (26, 28) of a T-slot (24). The engaging portion (152) is movable relative to the base (102) in a first direction between a locking position and an unlocking position, and in a second direction different from the first direction between a release position and a clamping position. The mounting arrangement (100, 200) is configured such that the engaging portion (152) is only movable from the release position to the clamping position when the engaging portion (152) is in the locking position.

## Description

### FIELD

The present disclosure relates to a mounting arrangement for a load carrier and to details of such mounting arrangements.

### BACKGROUND

Roof-mounted cargo boxes are widely used for transporting luggage and other items on vehicles. Traditional fixation methods often involve U-bolts or clamping systems that wrap around the crossbars of a roof rack or clamping systems that grasp the crossbars using claw-like constructions.

Modern roof racks increasingly feature T-slots as longitudinal grooves designed for adaptable mounting solutions. T-slots are particularly compatible with T-bolts, which offer a more integrated and adjustable method of securing accessories such as roof boxes.

Typical steps for mounting a roof box using T-bolts and T-slots may involve removing end caps from the crossbars to expose the T-slots, inserting T-bolts into the slots and sliding them to approximate positions based on the mounting points of the roof box, lifting the roof box onto the roof rack, aligning openings in the base of the box and of fastening means with the positions of the T-bolts, and tightening of the T-bolts using fastening means in the roof box.

Newer systems for mounting roof boxes using T-bolts and T-slots have evolved to allow the T-bolts to be inserted directly from above through the narrow opening of the T-slot, rather than being slid in from the ends of the crossbars.

However, this kind of installation has the drawback that it may be cumbersome for a user to precisely align the T-bolts with the narrow opening. Furthermore, known systems are complex and expensive. Another drawback is that known systems are comparatively large and take space in the interior of the roof box. A further drawback of known systems is that they are often cumbersome to use and/or do provide guidance to a user for achieving fast and reliable fixation.

### SUMMARY

The present disclosure aims at improving the above disadvantages of known systems.

It is an object to provide an enhanced mounting arrangement that is user-friendly and provides a secure fixation of a roof box to a roof rack.

The object is solved by the configurations as presented in the claims, aspects and example configurations, examples and embodiments as described herein. Advantageous further formations may be gleaned from the dependent claims and from the below description.

According to an aspect, a mounting arrangement is provided. The mounting arrangement may be suitable for mounting a roof box on a roof rack.

The mounting arrangement comprises a base. The base may be a main component which supports other elements of the mounting arrangement and is contacted with an object to be fixed using the mounting arrangement. The base may be a plate like member. The base may comprise a lower surface for contacting the object to be fixed by the mounting arrangement. The lower surface may comprise a structure corresponding to the carrying surface portion of the object on which the base is to be supported. The lower surface may comprise a substantially flat lower surface or a flat lower surface portion. The object to be fixed to the roof rack may be a cargo carrier such as a cargo basket or a cargo box.

The mounting arrangement further comprises an engaging portion configured to engage with an engaging section of a roof rack.

The engaging section may be an abutment surface of a T-slot. The engaging portion may be configured to engage behind the engaging section of the roof rack, for example of the T-slot. In general, the engaging section may be provided by a longitudinal groove integrated into a roof rack crossbar or another carrying member on which the object to be fixed by means of the mounting arrangement is to be mounted. The longitudinal groove may comprise a narrow opening at the top and a wider internal cavity. The narrow opening may be formed between abutment surfaces that are available for cooperating with the engaging portion.

The engaging portion is movable relative to the base in a first direction between a locking position and an unlocking position. Furthermore, the engaging portion is movable relative to the base in a second direction different from the first direction between a release position and a clamping position.

The first direction may be a direction resulting from a rotational movement of the engaging portion about a rotation axis. The second direction may be a direction which is perpendicular to the first direction. If the engaging portion is rotated in the first direction or along a first movement path, the second direction may be a direction or second movement path which runs in parallel with the rotation axis.

The engaging portion may be a rotatable relative to the base which may correspond to a movement in the first direction and may be movable towards and away from the base which may correspond to a movement in the second direction.

The locking position may be a position in which the engaging portion extends cross to the main extension direction of a T-slot. The locking position may be a position in which the engaging portion is positioned such that a portion of the same faces the abutment surfaces of the T-slot. The unlocking position may be a position in which the engaging portion is positioned such that it is aligned with the narrow opening of the T-slot and may be moved through the narrow opening. The release position may be a position in which the engaging portion is positioned further away from the base than in the clamping position. In the release position, the engaging portion may be positioned at a first distance from the base. In the clamping position, the engaging portion may be positioned at a second distance from the base different to the first distance. The first distance is larger than the second distance. Accordingly, by moving the engaging portion from the release position to the clamping position with the engaging portion inserted in the T-slot and rotated to the locking position, the base and any portion on which it is mounted may be clamped on the roof rack.

The mounting arrangement may comprise a first stop portion defining the unlocking position and/or may comprise a second stop portion defining the locking position, wherein the first stop portion and/or the second stop portion may be configured to arrest the engaging portion in the unlocking position and/or the locking position.

The mounting arrangement may be configured such that the engaging portion is only movable from the release position to the clamping position when the engaging portion is in the locking position. In this way, it is ensured that the engaging portion is correctly oriented for a secure engagement with the roof rack.

According to an embodiment, the mounting arrangement further comprises a locking mechanism configured to at least lock a movement of the engaging portion from the release position to the clamping position. The locking mechanism may be configured to allow the movement of the engaging portion from the release position to the clamping position when the engaging portion is in the locking position.

According to an embodiment, the mounting arrangement comprises a first operating portion. The first operating portion may be supported on the base. The first operating portion may be movable by a user. The first operating portion may be configured rotatable. The first operating portion may be configured as a knob. The first operating portion may be operatively coupled with the engaging portion for moving the engaging portion between the release position and the clamping position. For example, the first operating portion may be rotatable and the operative coupling may be such that a rotation of the first operating portion is transferred into a linear movement of the engaging portion.

According to an embodiment, the mounting arrangement comprises a second operating portion. The second operating portion may be supported on the base. The second operating portion may be operatively coupled with the engaging portion for moving the engaging portion between the locking position and the unlocking position. For example, the second operating portion may be configured rotatable and the operative coupling may be such that a rotation of the second operating portion is transferred into a rotation of the engaging portion.

According to an embodiment, the mounting arrangement comprises a locking mechanism configured to at least block a movement of the first operating portion relative to the second operating portion until the engaging portion is in the locking position.

According to an embodiment, the mounting arrangement is configured to arrest the engaging portion at least in the locking position and optionally in the unlocking position.

According to an embodiment, the second operating portion is torque transmittingly coupled with the engaging portion. The second operating portion may be torque transmittingly coupled with the engaging portion via an elongate force transfer portion or force transfer member. Engaging portion and force transfer portion may be formed in a single piece or may be two separate parts joined to each other so as to form an integral unit. The second operating portion may comprise a non-round opening in which a corresponding non-round section of the elongate force transfer portion is received slidable relative to the second operating portion in an extension direction of the non-round opening.

According to an embodiment, a movement of the second operating portion is allowed between a first position corresponding to the unlocking position of the engaging portion, and a second position corresponding to the locking position of the engaging portion. The first position and the second position may define end positions of the movement path of the second operating portion. The first position may correspond to the inactive position. The second position may correspond to the restraining position. An angular movement region of the second operating portion between the first position and the second position may be 90 degrees.

The mounting arrangement may comprise a first stop portion defining the first position and a second stop portion defining the second position. The first stop portion and/or the second stop portion may be configured to arrest the second operating portion in place.

The mounting arrangement may be configured such that the second operating portion is automatically arrested in the first stop portion and/or such that the second operating portion is automatically arrested in the second stop portion.

The first stop portion and the second stop portion may comprise a recess for partially accommodating the second operating portion so as to arrest the second operating portion in place.

The mounting arrangement may be configured such that the second operating portion is urged into the respective recess, for example by a spring or by the first operating portion.

The second operating portion may be slidably supported on a guiding ridge provided on the base. The first stop portion and the second stop portion may be connected by a guiding ridge provided on the base and configured to slidably support the second operating portion when moving between the first stop portion and the second stop portion. The first stop portion and the second stop portion may be arranged in the guiding ridge, for example as recesses.

According to an embodiment, the first operating portion is configured rotatable. According to an embodiment, the locking mechanism comprises a rotation locking arrangement configured to block a rotational movement of the first operating portion relative to the base by establishing a mechanical connection between the first operating portion and the base.

According to an embodiment, the rotation locking arrangement comprises a fixation section fixedly coupled to the base and a locking section movable between a protruding position and a retracted position. The protruding position may be a position in which the locking section is engaged with a locking section receiving portion on the first operating portion. The retracted position may be a position in which the locking section is disengaged from the locking section receiving portion.

The rotation locking arrangement may be integrally formed as a single piece. In addition or alternatively, the rotation locking arrangement may be formed from a metal sheet, for example by cutting and bending a metal sheet. The locking section may be provided in a free end portion of the rotation locking arrangement.

According to an embodiment, the locking section is movable from the protruding position to the retracted position by an interaction of the second operating portion with the rotation locking arrangement.

According to an embodiment, the second operating portion may be movable relative to the base between a restraining position and an inactive position. The restraining position may be a position in which the second operating portion applies a pushing force on the rotation locking arrangement to move the locking section to the retracted position or to hold the locking section in the retracted position. The inactive position may be a position in which the second operating portion allows the locking section to move to the protruding position.

According to an embodiment, the second operating portion comprises a lever with a force application portion configured to abut against the force receiving surface of the rotation locking arrangement to urge the locking section to the retracted position. The locking section may be urged to the retracted position under or through deformation of the rotation locking arrangement.

The second operating portion may comprise a gripping portion configured to be grasped by a user.

The gripping portion and the force application portion may be provided on opposite end portions of the second operating portion.

According to an embodiment, the locking mechanism is configured to torque transmittingly couple the second operating portion with the first operating portion until the engaging portion is positioned in the locking position, and to decouple the second operating portion from the first operating portion when the engaging portion is positioned in the locking position.

According to an embodiment, the locking mechanism comprises a locking portion movable between a coupling position in which a torque transmission between the second operating portion and the first operating portion is established, and an uncoupling position in which the torque transmission is prevented.

According to an embodiment, the locking mechanism further comprises an uncoupling portion configured to effect a movement of the locking portion towards the uncoupling position upon moving the engaging portion to the locking position.

According to an embodiment, the uncoupling portion comprises a guiding member, for example a protrusion protruding from the base, wherein the guiding member is configured to be contacted by the locking portion upon moving the engaging portion to the locking position and to guide the locking portion to the disengaging position.

According to an embodiment, the locking portion is a portion of a spring member. The spring member may be made from cutting and bending a metal sheet.

Further provided is a method of mounting a roof box to a crossbar comprising a T-slot or T-rail. The method comprises the step of providing a mounting arrangement. The mounting arrangement may be configured according to one of the embodiments and possible configurations that have been described before. The method further comprises the step of arranging the roof box on the crossbar. The method further comprises the step of arranging the engaging portion in the unlocking and release position in the T-slot. The method further comprises the step of operating the second operating portion such that the engaging portion is arranged in the locking position. The method may further comprise the step of operating the first operating portion such that the engaging portion is arranged in the clamping position.

Further provided is a method of mounting a roof box to a crossbar comprising a T-slot or T-rail. The method comprises the step of providing a mounting arrangement, for example a mounting arrangement as herein described in embodiments and configurations. The method further comprises the step of arranging the roof box on the crossbar. The method further comprises the step of arranging the engaging portion in the unlocking and release position in the T-slot or T-rail. The method further comprises the step of operating the first operating portion such that the engaging portion is arranged in the locking position and the clamping position.

According to an embodiment, a tightening member is provided. The tightening member can be a first operating portion, for example a first operating portion for a mounting arrangement as described in other portions of this specification. The tightening member may be a tightening knob.

The tightening member comprises a force input portion configured to be grasped and rotated by a user.

The tightening member comprises a force output portion. The force output portion may be a mechanical interface for force-transmittingly receiving a force transfer portion. The force output portion may be a mechanical interface configured to be coupled to a force receiving portion of a clamping mechanism. The force output portion may be configured to be coupled to the first coupling section of the elongate force transfer portion. The force output portion may comprise a threaded portion for receiving a threaded portion of the elongate force transfer portion. The force output portion may be coupled to the elongate force transfer portion of a T-bolt. The force output portion may be coupled to the elongate force transfer portion such that a rotation of the force output portion is transferred into a translatory movement of the elongate force transfer portion. The mechanical interface may comprise a threaded opening for receiving a threaded section of the elongate force transfer portion.

The tightening member further comprises a torque limiting arrangement operatively coupling the force input portion and the force output portion.

The torque limiting arrangement may be configured to release a force transfer between the force input portion and the force output portion by movement of a first force transfer section relative to a second force transfer section in radial direction.

According to an embodiment, the first force transfer section is spring-mounted on the force input portion.

According to an embodiment, the first force transfer section is straight and extends in or along a plane which runs in parallel with the rotation axis of the force input portion.

According to an embodiment, the first force transfer section is cantilevered on the force input portion via a fixation section.

According to an embodiment, the first force transfer section and the fixation section together form a force transfer member and the first force transfer section and the fixation section may be integrally formed in a single piece, for example made from cutting and/or bending a metal sheet.

According to an embodiment, the torque limiting arrangement comprises at least one plate spring comprising the first force transfer section and the fixation section for supporting the plate spring on the force input portion.

According to an embodiment, the plate spring is bent in a V-shape with the fixation section forming a first leg and the first force transfer section forming a second leg.

According to an embodiment, the fixation section is configured to follow an inner contour of the force input portion. The fixation section may be curved. The force input portion may be cup-shaped. In addition or alternatively, the force input portion may comprise a hollow cylindrical portion configured to accommodate the fixation section and the first force transfer section therein.

According to an embodiment, the first force transfer section is configured as a force application portion and the second force transfer section is configured as a force receiving portion.

According to an embodiment, the torque limiting arrangement is configured to limit a torque transfer from the force input portion to the force output portion only in a first rotational direction of the force input portion, and to not limit the torque transfer in a second rotation direction opposite to the first rotational direction.

According to an embodiment, the second force transfer section is provided on a force transfer portion provided on or integrally formed with the force output section.

The force transfer portion may comprise multiple second force transfer sections.

The force transfer portion may be formed as a gearwheel with the force transfer sections forming teeth of the gearwheel

Each force transfer section may be formed by a tangential protrusion protruding from a substantially circular cylindrical portion.

A free end portion of the tangential protrusion may be rounded to allow the first force transfer section to glide over the tangential protrusion when a predetermined torque is exceeded.

According to an embodiment, a mounting arrangement is provided. The mounting arrangement may comprise features and configurations as described in other portions of this specification. The mounting arrangement may be a mounting arrangement comprising one or more of the features as described in connection with other configurations of mounting arrangements taken in combination with a tightening member as described in other portions of this specification.

The mounting arrangement may comprise a base. The base may be configured to be movably supported on an object to be fixed. The object may be a bottom portion of a roof box.

The mounting arrangement may comprise an engaging portion supported on the base and configured to engage with an engaging section of a roof rack, for example an abutment surface of a T-slot.

The mounting arrangement may comprise a positioning portion arranged at a distance from the engaging portion and configured for positioning the base in an engaging position in which the engaging portion is positioned for an engagement with the engaging section.

The engaging portion and the positioning portion may be arranged on the same side of the base.

According to an embodiment, the positioning portion is provided on a lower side of the base such that the positioning portion is accessible by a user and/or may contact a side of the cross bar, for example a front side or the rear side of the cross bar.

According to an embodiment, the positioning portion protrudes from the base.

According to an embodiment, the positioning portion is arranged at a distance from the engaging portion corresponding to a distance between an end of a crossbar, for example a front end or a rear end, and a T-slot so that the engaging portion is correctly positioned with respect to the T-slot when the positioning portion is in contact with the cross bar.

According to an embodiment, the base is configured to be in a first direction linearly movably supportable on the object to be fixed, for example configured to be linearly movably guided on the object. The base may comprise a lower surface being formed to be linearly guided on the object. The lower surface may comprise a recess or protrusion for engaging with a corresponding portion on the object.

According to an embodiment, the positioning portion is arranged spaced apart from the engaging portion in the first direction.

According to an embodiment, the positioning portion comprises a dimension allowing it to extend through the object and to protrude from the object on an opposite side.

According to an embodiment, the mounting arrangement comprises two of the positioning portions, a front positioning portion and a rear positioning portion. The engaging portion may be provided between the two positioning portions.

Further disclosed is a roof box comprising a bottom portion and a mounting arrangement as described in other portions of this specification. The engaging portion and the base may be arranged on opposite sides of the bottom portion. The positioning portion extends through the bottom portion and protrudes from the bottom portion on an opposite side of the bottom portion.

According to an embodiment, the mounting arrangement is configured to arrest the engaging portion at least in the locking position and optionally in the unlocking position. The mounting arrangement may comprise a first stop portion defining the unlocking position and a second stop portion defining the locking position. The first stop portion and/or the second stop portion may be configured to arrest the engaging section in place, for example via the second operating portion disclosed in connection with other embodiments and configurations. The mounting arrangement may be configured such that the engaging portion is automatically arrested by means of the first stop portion and/or such that the engaging portion is automatically arrested by the second stop portion.

According to an embodiment, the first stop portion and the second stop portion may comprise a recess for partially accommodating a control portion operatively coupled with the engaging portion so as to arrest the control portion in place. The mounting arrangement may be configured such that the control portion is urged into the respective recess, for example by a spring.

According to an embodiment, the first stop portion and the second stop portion are provided on the base.

According to an embodiment, the first stop portion and the second stop portion are connected by a guiding ridge provided on the base and configured to slidably support the control portion when moving between the first stop portion and the second stop portion.

According to an embodiment, the control portion is torque transmittingly coupled with the engaging portion, for example via an elongate force transfer portion. The control portion may comprise a non-round opening. The elongate force transfer portion may comprise a corresponding non-round section which is received in the non-round opening, for example such that it is slidable relative to the second operating portion in an extension direction of the non-round opening. The control portion may be slidably supported on the base.

According to an embodiment, a movement of the control portion is allowed between a first position corresponding to the unlocking position of the engaging portion and a second position corresponding to the locking position of the engaging portion. The first position and the second position may define end positions of a movement path of the control portion. An angular movement region of the control portion between the first position and the second position may be 90 degrees.

According to an embodiment, the first stop portion and/or the second stop portion is/are configured to arrest the control portion in place.

According to an embodiment, the mounting arrangement is configured such that the control portion is automatically arrested by the first stop portion and/or such that the control member is automatically arrested by the second stop portion.

According to an embodiment, the mounting arrangement is configured such that the control portion is urged into the respective recess of the stop portions, for example by a spring.

According to an embodiment, the control portion is configured as a beam extending perpendicular to a movement direction, for example a rotation direction, of the engaging portion.

According to an embodiment, the control portion is configured as the second operating portion as described in connection with other embodiments and configurations. The second operating portion is operatively coupled with the engaging portion for moving the engaging portion between the locking position and the unlocking position or is configured as a portion of the second operating portion, for example a lower portion of the second operating portion. The mounting arrangement may comprise a first operating portion supported on the base and movable by a user, in particular the first operating portion as described in connection with other embodiments and configurations, and a second operating portion which comprises or is configured by the control portion.

In some embodiments, the mounting arrangement is configured to automatically change the movement of the engaging portion from the first direction to the second direction when the engaging portion reaches the locking position. For example, the configuration may be such that the engaging portion is first moved, for example rotated, in the first direction up to a certain point and is then moved, for example translatory moved, in the second direction. As disclosed in other configurations, the first direction may be a direction in which the engaging portion is movable relative to the base between a locking position and an unlocking position and the second direction may be a direction which is different from the first direction and in which the engaging portion is movable relative to the base between the release position and the clamping position.

The mounting arrangement may comprise a first operating portion supported on the base and movable by a user. The first operating portion may be operatively coupled with the engaging portion for moving the engaging portion between the release position and the clamping position. The mounting arrangement may further comprise a control portion, for example the control portion as described before, which is operatively coupled with the engaging portion for moving the engaging portion between the locking position and the unlocking position. The mounting arrangement may further comprise a locking mechanism configured to at least lock a movement of the first operating portion relative to the control portion until the engaging portion is in the locking position.

According to an embodiment, the locking mechanism is configured to torque transmittingly couple the control portion with the first operating portion until the engaging portion is positioned in the locking position, and to decouple the control portion from the first operating portion when the engaging portion is positioned in the locking position.

According to an embodiment, the locking mechanism comprises a locking portion movable between a coupling position in which a torque transmission between the control portion and the first operating portion is established, and in uncoupling position in which the torque transmission is prevented. The locking portion may be movable in a radial direction relative to the first operating portion.

According to an embodiment, the locking mechanism further comprises an uncoupling portion configured to effect a movement of the locking portion towards the uncoupling position upon moving the engaging portion to the locking position.

According to an embodiment, the uncoupling portion comprises a guiding member, for example a protrusion protruding from the base, wherein the guiding member is configured to be contacted by the locking portion upon moving the engaging portion to the locking position and to guide the locking portion to the disengaging position.

According to an embodiment, the locking portion is a portion of the spring member, for example made from cutting and bending a metal sheet.

According to an embodiment, the first operating portion comprises a locking recess configured to receive the locking portion when it is in the coupling position. The first operating portion may comprise a force input portion, for example a knob, in particular a cup-shaped force input portion. The locking recess may be provided on the force input portion such that it is open radially inwards.

Other features of the present invention will be apparent from consideration of the information contained above as well as in or in combination with the following detailed description, drawings and claims. The present invention is illustrated by way of example, and not by way of limitation, in the figures of the accompanying drawings.

### BRIEF DESCRIPTION OF THE DRAWINGS

The accompanying drawings, which are incorporated herein and form part of the specification, illustrate possible configurations of embodiments and, together with the description, further serve to explain the principles of the embodiments and to enable a person skilled in the art to make and use the embodiments. It is noted that the same or similar parts in the different figures are denoted by the same reference signs.
Fig. 1 shows a perspective illustration of a roof box portion mounted on a crossbar of a roof rack by means of a mounting arrangement according to an embodiment.
Fig. 2 shows a perspective illustration of a mounting arrangement according to an embodiment in a first configuration.
Fig. 3 shows a perspective illustration of interior components of the mounting arrangement of Fig. 2.
Fig. 4 shows a further perspective illustration of components of the mounting arrangement of Figs. 2 and 3.
Fig. 5 shows a perspective illustration of the mounting arrangement of Fig. 2 in a second configuration.
Fig. 6 shows a side view of the mounting arrangement.
Fig. 7 shows a partly sectional plan view on a mounting arrangement according to a further embodiment in a first configuration.
Fig. 8 shows a side view of the mounting arrangement of Fig. 7.
Fig. 9 shows the mounting arrangement Fig. 7 in a second configuration.
Fig. 10 shows a side view of the mounting arrangement of Fig. 9.
Fig. 11 shows a perspective view on interior components of the mounting arrangement of Fig. 7.
Fig. 12 shows a perspective view on the interior components of the mounting arrangement of Fig. 9.
Fig. 13 shows an exploded view of a tightening member for operating the mounting arrangement.
Fig. 14 shows a perspective illustration of the tightening member of Fig. 13.
Fig. 15 shows a sectional view of the mounting arrangement according to Figs. 7 to 12 with a tightening member of Figs. 13 and 14 as operating portion.

All figures are only schematic depictions of exemplary embodiments in which, in particular, distances and dimensional correlations are not presented to scale.

The features and advantages of embodiments will become more apparent from the detailed description as given below when taken in conjunction with the drawings, in which like reference signs identify corresponding elements throughout. In the drawings like reference numbers generally indicate identical, functionally similar and/or structurally similar elements.

### DETAILED DESCRIPTION

The following detailed description is merely exemplary in nature and is not intended to limit application and uses. Furthermore, there is no intention to be bound by any theory presented in the preceding background or summary or the following detailed description.

Embodiments of the present disclosure are described in detail with reference to embodiments thereof as illustrated in the accompanying drawings. References to "one embodiment," "an embodiment," "some embodiments," etc., indicate that the embodiment(s) described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Spatially relative terms, such as "beneath," "below," "lower," "above," "on," "upper," "opposite" and the like, may be used herein for ease of description to describe one element or feature's relationship to another element(s) or feature(s) as illustrated in the figures. The spatially relative terms are intended to encompass different orientations of the device in use or in operation in addition to the orientation depicted in the figures. The apparatus may be otherwise oriented (e.g., rotated 90 degrees or at other orientations) and the spatially relative descriptors used herein may likewise be interpreted accordingly.

Terms describing parts or members as "releasable" and/or "detachable" relate to configurations in which the parts or members are at least decouplable from another part or member without destroying one of the cooperating parts or members. These terms may also describe configurations in which the parts and members may be decoupled or disengaged without tools (tool-free). Terms describing parts or members as "positively locked" and/or "positively coupled" relate to configurations in which the parts or members are in positive engagement, positive mechanical engagement or interlocked.

Some aspects of the present disclosure are defined below. These aspects may form exemplary embodiments of the present disclosure and may be combined with features mentioned in other portions of this specification.

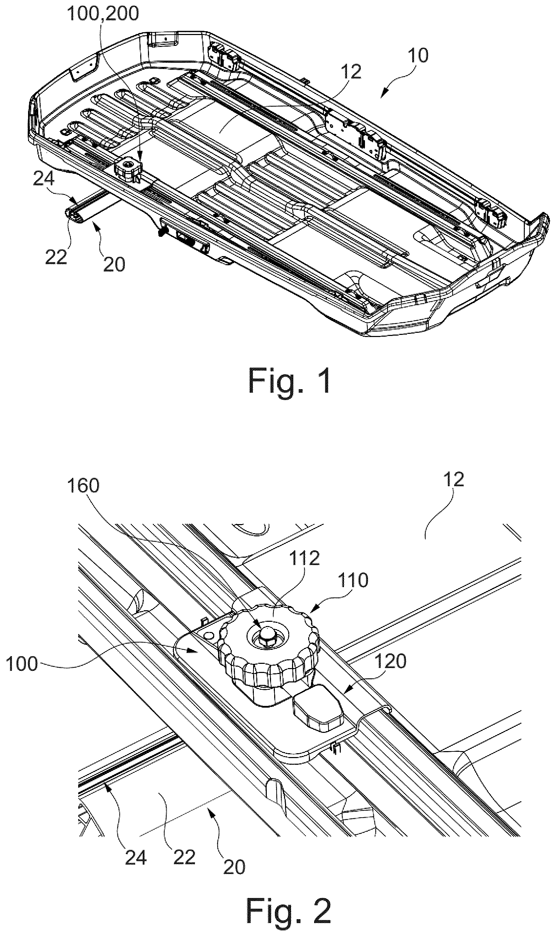

Fig. 1 shows a perspective view of a bottom portion 12 of a roof box 10 mounted on a crossbar 22 of a roof rack 20 by means of a mounting arrangement 100, 200 according to embodiments. Although only one mounting arrangement is shown, it is noted that multiple mounting arrangements 100, 200 may be provided and used for fixation, for example four mounting arrangements 100, 200, in particular two in the front and two in the back of the bottom portion 12.

It is noted that the bottom portion 12 is shown as an exemplary member that is fixable on a supporting structure by means of the mounting arrangement 100, 200. However, the mounting arrangement may be used in connection with other members that are to be coupled to a supporting structure. Such other members may include cargo baskets or generally any kind of part that is to be fixed on the supporting structure in the way described in connection with the bottom portion 12 of the roof box 10.

It is further noted that the crossbar and roof rack are only examples of supporting structures and other supporting structures may be provided, for example supporting structures that are not mounted on the roof of a vehicle but on the rear of a vehicle, such as parts of load platforms of hitch mounted carriers or trunk lid mounted carrying structures.

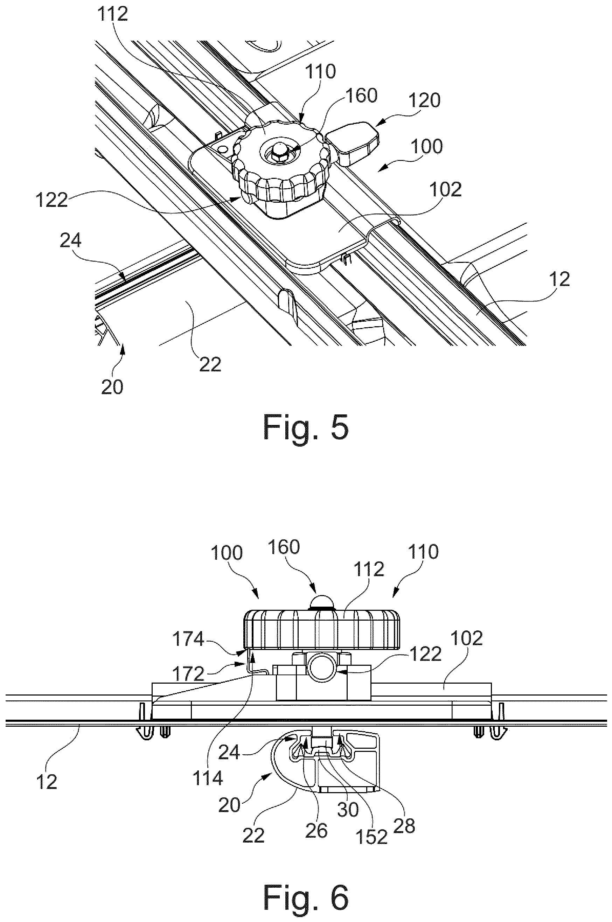

The crossbar 22 comprises an engaging geometry or engaging section. In the present embodiment, the engaging section is provided by way of a T-slot 24 or T-rail in the crossbar 22 as is for example illustrated in Figs.5, 6, 8 and 10. As best seen in Figs. 5 and 6, the engaging section 24 may be provided by a longitudinal groove integrated into a roof rack crossbar or another carrying member on which the object to be fixed by means of the mounting arrangement 100, 200 is to be mounted. The longitudinal groove may comprise a narrow opening, for example at the top, and a wider internal cavity below the narrow opening. The narrow opening may be formed between abutment surfaces 26, 28 that are available for cooperating with the engaging portion152. The abutment surfaces 26, 28 face towards the wider internal cavity. In the embodiments shown, the abutment surfaces 26, 28 face downwards. A seal or elastic sealing member 30 for closing the narrow opening of the T-slot 24 from below but configured to be locally pushable into the wider internal cavity by the engaging portion 152 from above may be provided in the wider internal cavity of the crossbar 22.

The mounting arrangement 100, 200 is configured to clamp the bottom portion 12 between crossbar 22 and mounting arrangement 100, 200. The mounting arrangement 100, 200 is configured to engage with the crossbar 22. The mounting arrangement 100, 200 is configured to pull the crossbar towards the mounting arrangement 100, 200 or to push the bottom portion 12 against the crossbar 22 to create a friction-locking or force-locking connection between bottom portion 12 and crossbar 22 to prevent movement of the bottom portion 12 along the crossbar in lateral direction.

The mounting arrangement 100, 200 comprises a base 102 and a clamping member 150 supported on the base 102. The clamping member 150 comprises an engaging portion 152 and an elongate force transfer portion 154.

The engaging portion 152 may be provided on a lower end of the elongate force transfer portion 154.

The elongate force transfer portion 154 may comprise a first coupling section 158 on its upper end portion. The first coupling section 158 may be a threaded portion. The first coupling section 158 is configured to receive a force in axial or longitudinal direction of the elongate force transfer portion 154. This allows to adjust a longitudinal position of the force transfer portion 154 and of the engaging portion 152 relative to the base 102 and to move the engaging portion 152 between a release position and a clamping position, wherein a distance between base 102 and engaging portion 152 is larger when the engaging portion 152 is in the release position.

In the embodiment, the clamping member is a T-bolt. In general, the engaging portion 152 may comprise a protrusion protruding from the elongate force transfer portion 154 in radial direction. The engaging portion 152 may comprise two protrusions protruding from laterally opposite sides of the elongate force transfer portion 154 in radial direction giving the T-bolt its characteristic T-shape. The T-bolt can be coldformed and/or turned.

The engaging portion 152 comprises a width that is smaller than the width of the narrow opening to allow an insertion of the engaging portion 152 into the wider internal cavity through the narrow opening. The insertion is possible when an extension direction of the protrusions is aligned with the main extension direction of the narrow opening. A position of the engaging portion in which the engaging portion 152 can be passed through the narrow opening is referred to as unlocking position. On the other hand, the protrusions are designed such that they cannot be passed through the narrow opening when the engaging portion is rotated inside the wider internal cavity to a locking position in which the protrusions are not aligned with the narrow opening, for example arranged below the abutment surfaces 26, 28.

The elongate force transfer portion 154 may further comprise a second coupling section 156. The second coupling section 156 may be a non-round section, more precisely a section with a non-round outer circumference. The second coupling section 156 is a force receiving portion configured to receive a rotational force while allowing a movement of the elongate force transfer portion 154 in axial or longitudinal direction. Accordingly, a force for rotating the engaging portion 152 may be applied on the second coupling section 156. The second coupling section 156 may comprise a square cross section.

In each embodiment, the mounting arrangement 100, 200 comprises a first operating portion 110, 210 supported on the base 102 and movable by a user. The first operating portion 110, 210 is coupled to the engaging portion 152 such that a movement of the first operating portion 110, 210 is transferred into a movement of the engaging section 152 between the release position and the clamping position.

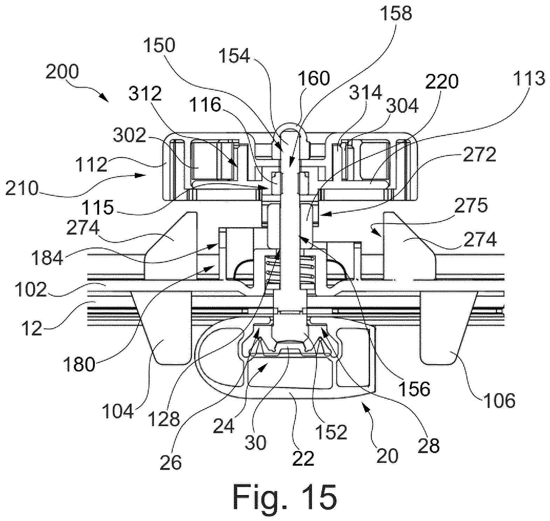

In the embodiments, the first operating portion 110, 210 is a knob that may be grasped and rotated by a user. The first operating portion 110, 210 may comprise a force output portion 113. The force output portion 113 comprises a mechanical interface 115 by means of which the force output portion 113 is coupled to the clamping member 150. The mechanical interface 115 may be threadedly engaged with the first coupling section 158, for example by means of a portion comprising an internal thread such as a force transfer nut 116 (see for example Fig. 15) so that a rotation of the first operating portion 110, 210 changes the position of the engaging portion 152 relative to the first operating portion 110, 210 and the base 102. The force transfer nut 116 may be molded into the force output portion 113 or held therein in a different manner, for example received in a recess.

A cap nut 160 is fixed on the free end of the first coupling section 158 and provides a stop that prevents the clamping member 150 from coming off of the knob. Furthermore, the cap nut 160 acts as an abutment portion in untightening direction meaning that when the first operating portion 110, 210 is rotated relative to the clamping member 150 until it abuts the cap nut 160 and is then further rotated in untightening direction, the clamping member 150 and the first operating portion 110, 210 are torque transmittingly coupled so that the clamping member 150 is rotated together with the rotation of the first operating portion 110, 210 or taken with the first operating portion 110, 210 in untightening direction. Fig. 15 shows a state in which the force input portion 113 is in contact with the cap nut 160.

The first operating portion 110, 210 may be a tightening member as described in other sections of this specification. The first operating portion 110, 210 or tightening member may optionally comprise a torque limiting capability that limits the tightening torque to a maximum allowable torque.

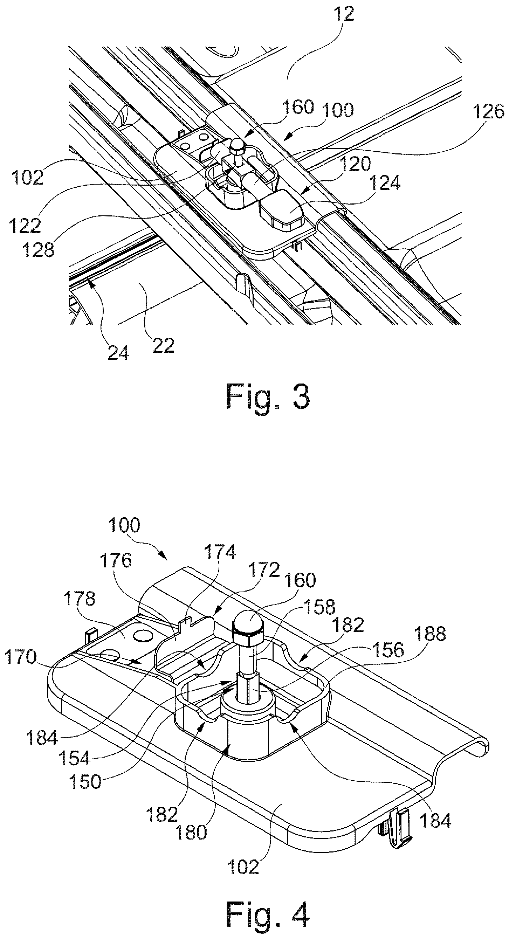

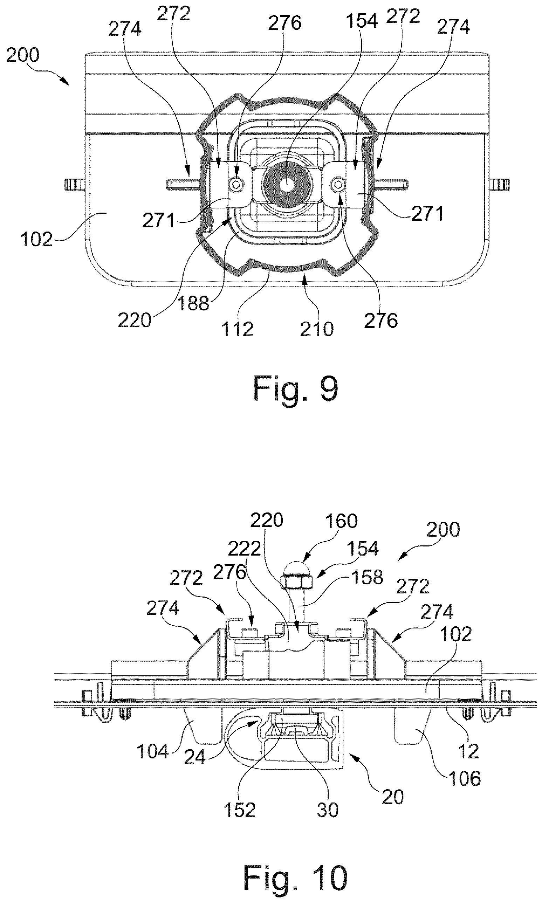

In some mounting arrangement embodiments, the mounting arrangement 100, 200 comprises a second operating portion 120, 220 which is torque transmittingly coupled with the clamping member 150, for example torque transmittingly coupled with the second coupling section 156. The second operating portion 120, 220 is rotatable between a first position (see Figs. 5 and 6) in which the engaging portion 152 is in the unlocking position (see for example Fig. 6 or Fig. 15), and a second position (see Figs. 2 and 3) in which the engaging portion 152 is in the locking position shown in Fig. 10.

The mounting arrangement 100, 200 may comprise a first stop portion 182 defining the first position and a second stop portion 184 defining the second position of the second operating portion 120, 220. The second operating portion 120, 220 may be slidably guided on a guiding portion 180 provided on the base 102, for example on a guiding ridge 188 provided on the guiding portion 180. The first stop portion 182 and/or the second stop portion 184 may comprise a recess for partially accommodating the second operating portion 120 so as to arrest the second operating portion 120 in place in the respective position. For example, in some configurations, once the second operating portion 120, 220 is arranged in the second stop portion 184, for example partially in a recess provided therein, and the clamping member 150 is tightened, an urging force is applied on the second operating portion 120, 220 by the first operating portion 110, 210 which urges it into the recess thereby making it impossible or at least more difficult for the second operating portion 120, 220 to rotate out of the second stop portion 184. In this way, the safety is increased because it is prevented that the clamping member 150 unintentionally rotates out of the second stop portion 184.

In some embodiments, the mounting arrangement 100, 200 is configured such that the second operating portion 120, 220 is blocked from rotating when the engaging portion 152 is in the clamping position. In some embodiments, the mounting arrangement 100, 200 is configured such that the second operating portion 120, 220 is blocked from rotating out of the second stop portion 184 when the engaging portion 152 is in the clamping position.

In some embodiments, the mounting arrangement 100, 200 is configured such that the engaging portion 152 is only movable from the release position to the clamping position when the engaging portion 152 is in the locking position.

In the embodiment shown in Figs. 2 to 6, the mounting arrangement 100 comprises a second operating portion 120 in the form of a lever 126 that is movable independent of the first operating portion 110.

In some embodiments, the mounting arrangement comprises a locking mechanism 170; 270 configured to at least lock a movement of said first operating portion 110, 210 relative to the second operating portion 120, 220 until the engaging portion 152 is in the locking position.

In the embodiment shown in Figs. 2 to 6, the mounting arrangement comprises a rotation locking arrangement 172 configured to block a rotational movement of the first operating portion 110 relative to the base 102 by establishing a mechanical connection between the first operating portion 110 and the base 102.

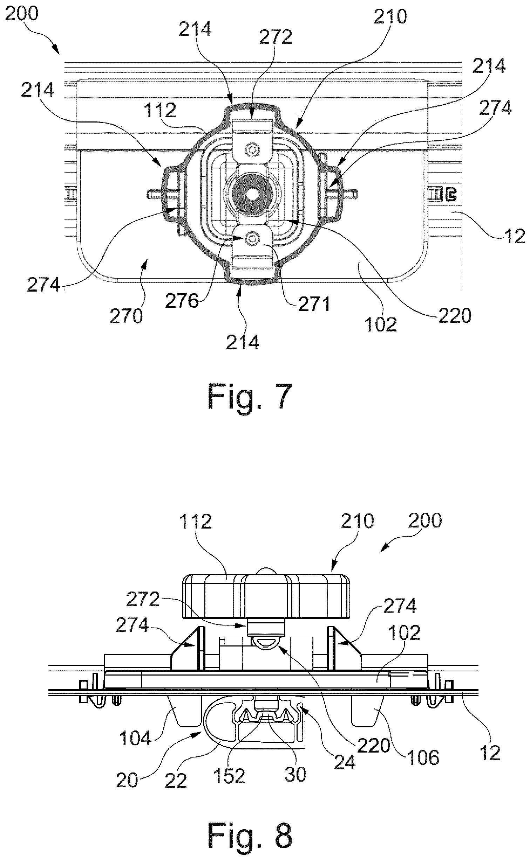

In the embodiment shown in Figs. 7 to 12 and 15, the first operating portion 210 and the second operating portion 220 are configured to be torque transmittingly coupled to commonly rotate until the engaging portion 152 is in the locking position, and to be decoupled when the engaging portion 152 reaches the locking position such that the first operating portion 210 can be rotated relative to the engaging portion 152 while the engaging portion 152 remains in the locking position.

In the embodiments shown in Figs. 1 to 12 and 15, the first operating portion 110, 210 may be supported on the second operating portion 120, 220 and may be operatively coupled with the clamping member 150 such that a rotation of the first operating portion 110, 210 relative to the second operating portion 120, 220 may lead to a translatory movement of the clamping member 150 along its rotational axis, for example perpendicular to a rotational plane of the first operating portion 110, 210 and of the second operating portion 120, 220, relative to the second operating portion 120, 220. Accordingly, preventing a rotation of the first operating portion 110, 210 relative to the second operating portion 120, 220 prevents a movement of the engaging portion between release position and clamping position.

As best seen in Fig. 4, the rotation locking arrangement 172 may comprise a fixation section 178 fixedly coupled to the base 102. The rotation locking arrangement 172 may comprise a locking section 174 movable between a protruding position in which the locking section 174 is engaged with a locking section receiving portion 114 on the first operating portion 110, for example a recess provided in the lower portion of the knob, and a retracted position in which the locking section 174 is disengaged from the locking section receiving portion 114. The rotation locking arrangement 172 may be integrally formed as a single piece. The rotation locking arrangement 172 may be formed from a metal sheet, in particular by cutting and bending a metal sheet. The rotation locking arrangement 172 may be elastically deformable or bendable to move the locking section 174 between the retracted position and the protruding position. The locking section 174 may be part of a spring member supported on the base 102.

In the embodiment of Figs. 2 to 6, the locking section is movable from the protruding position to the retracted position by an interaction of the second operating portion 120 with the rotation locking arrangement 172. The second operating portion 120 is movable relative to the base 102, for example rotatable, in particular rotatable about the same axis as the first operating portion 110, between a restraining position in which the second operating portion 120 applies a pushing force on the rotation locking arrangement 172 to move the locking section 174 to the retracted position or to hold the locking section 174 in the retracted position (see Fig. 3), and an inactive position in which the second operating portion 120 allows the locking section 174 to move to the protruding position and engage with the first operating portion 110 to prevent its movement (see Fig. 6).

The second operating portion 120 may comprise a lever 126 with a force application portion 122 configured to abut against a force receiving surface 176 of the rotation locking arrangement 172 to urge the locking section 174 to the retracted position under deformation of the rotation locking arrangement 172.

The second operating portion 120 may comprise a gripping portion 124 configured to be grasped by a user, wherein the gripping portion 124 and the force application portion 122 may be provided on opposite end portions of the second operating portion 120. The second operating portion 120 may comprise a non-round opening 128 in which the second coupling section 156 of the elongate force transfer portion 154 is received torque transmittingly and slidable relative to the second operating portion 120.

The first operating portion 110 may be supported, for example slidably supported, on the second operating portion 120.

A method of operating the mounting arrangement 100 of Figs. 2 to 6 for fixing an object, for example a roof box, to a crossmember with a T-slot will be described in the following starting from a state in which the engaging portion 152 is in the release position and the unlocking position and the second operating portion 120 is in the inactive position or first position (see Fig. 6).

First, the object to be mounted on the crossbar, for example the roof box, is arranged on the crossbar 22 and the engaging portion of the mounting arrangement 100, which is positioned in the release position and the unlocking position, is aligned with the narrow opening of the T-slot 24. This may in some configurations be done by moving the mounting arrangement relative to the roof box 10 in longitudinal direction of the roof box 10. For that, the mounting arrangement may comprise one or more positioning protrusions 104, 106, for example two positioning protrusions, protruding from the lower side of the base 102 through the object on which the mounting arrangement is supported. For example, the object, for example the lower portion of a roof box, may comprise an opening or slit through which the one or more positioning protrusions 104, 106 may extend such that they protrude from an opposite side of the object on which the base 102 is supported.

The positioning protrusions 104, 106 may comprise a height that allows a user to grasp or push the positioning protrusion 104, 106 for moving the mounting arrangement and/or that allows the positioning protrusions 104, 106 to abut or contact a long side of the crossbar 22, for example the front side of the crossbar 22 or the rear side of the crossbar 22 (see Fig. 8).

After the engaging portion is correctly positioned, the mounting arrangement 100 is moved towards the crossbar 22 for inserting the engaging portion 152 into the T-slot. As is visible in the drawings (see Figs. 6, 8 and 10), a seal 30 for sealing the narrow opening of the T-slot may be arranged in the crossbar 22. Accordingly, it may be necessary to push the mounting arrangement 100, 200 downwards such that the engaging portion 152 elastically deforms the seal 30 to move the engaging portion 152 through the narrow opening into the interior of the T-slot.

After that, the second operating portion 120 is moved to the second position which may be the restraining position (see Fig. 3), to move the engaging portion 152 to the locking position. The restraining position may be defined by the second stop portion 184. The second stop portion 184 may be a recess. In the restraining position, the second operating portion 120 is accommodated in the recess. The second operating portion 120 also operates the locking mechanism 170 upon rotating the engaging portion 152, more precisely in a manner that the locking arrangement 174 is disengaged from the first operating portion 110 as soon as the engaging portion reaches the locking position. Subsequently, the first operating portion 110 is rotated relative to the second operating portion 120 and relative to the base 102, for example clockwise, to move the engaging portion 152 to the clamping position in which it abuts against the abutment surfaces 26, 28. By rotating the first operating portion 110 in clockwise direction, the engaging portion 152 is moved towards the first operating portion 110 an applies a clamping force on the crossbar 22. At the same time, the first operating portion 110 applies a clamping force on the second operating portion 120 which securely locks the second operating portion 120 in the recess of the second stop portion 184. Accordingly, moving the engaging portion 152 out of the locking position is prevented by a positive locking or form fit engagement between second operating portion 120 and the second stop portion 184. Thus, effecting clamping leads to secure locking. A movement of the engaging portion 152 to the clamping position locks the second operating portion 120 in the second stop portion 184.

Untightening is done in reverse order of steps by first rotating the first operating portion 110 in opposite direction and, as soon as the clamping force on the crossbar 22 and the second operating portion 120 is released, moving the second operating portion 120 to the inactive position thereby rotating the engaging portion 152 to the unlocking position and subsequently removing the object from the crossbar 22.

In the embodiment shown in Figs. 7 to 12, a modified locking mechanism 270 is provided. The locking mechanism 270 is configured to torque transmittingly couple the second operating portion 220 with the first operating portion 210 until the engaging portion 152 is positioned in the locking position, and to decouple the second operating portion 220 from the first operating portion 210 when the engaging portion 152 is positioned in said locking position. The second operating portion 220 may also be referred to as control portion 220 since in the embodiment of Figs. 7 to 12 and 15, it is not grasped by a user as in other embodiments. Rather, the second operating portion 220 or control portion 220 is automatically decoupled from and coupled to the first operating portion 210 as will become obvious from the following description. With such a configuration, the process of moving the engaging portion 152 to the locking position and subsequent movement of the engaging portion 152 to the clamping position can be performed simply by rotating the first operating portion 210 in one direction only, for example clockwise. The tightening process is, thus, greatly simplified for a user since the user does not have to operate two separate operating portions by hand. By contrast, the mechanism is such that the movement direction of the engaging portion may be automatically changed from a rotational movement to a translatory movement.

The locking mechanism 270 comprises a locking portion 272 movable between a coupling position in which a torque transmission between the second operating portion 220 and the first operating portion 210 is established, and an uncoupling position in which the torque transmission is prevented. The first operating portion 210 comprises a locking recess 214 open radially inwards and configured to receive the locking portion 272 when it is in the coupling position (see Fig. 7). The locking mechanism 270 may comprise an uncoupling portion 274 configured to effect a movement of the locking portion 272 towards the uncoupling position (see Figs. 9 and 10) upon moving the engaging portion 152 to the locking position. The configuration may be such that the locking portion 272 reaches the uncoupling position when the engaging portion 152 reaches the locking position.

The uncoupling portion 274 may comprise a guiding member, for example a protrusion protruding from the base 102. The guiding member may be configured to be contacted by the locking portion 272 upon moving the engaging portion 152 to the locking position and to guide the locking portion 272 to the disengaging position. For example, a portion of the locking portion 272 may contact and slide on a control surface 275 and/or ramp like section on the uncoupling portion 274, wherein the control surface may face towards a rotation axis of the second operating portion 220 and may be arranged at a distance from the rotation axis that is smaller than the distance between locking portion 272 and the rotation axis when the locking portion 272 is in an unloaded state. The locking portion 272 is thus pushed radially inward towards the rotation axis by the uncoupling portion 274 when the locking portion 272 is moved along the uncoupling portion. The locking portion 272 may be a portion of a spring member 271 that may be made from cutting and/or bending a metal sheet. The spring member 271 may comprise a fixed end that may be fixed by means of a fastener 276, for example on a carrier 222 such as a beam. The carrier 222 may comprise a non-round opening for torque transmittingly receiving the second coupling section 156 in a manner described before in connection with second operating portion 120 in other embodiments. The non-round opening may be provided in the longitudinal middle. A locking portion 272 may be fixed on each free end portion of the carrier 222.

Further features of the embodiment according to Figs. 7 to 12 and 15 will be described with reference to Fig. 15 in the following.

Fig. 15 shows a sectional view of a mounting arrangement 200 according to an embodiment that is used to couple a bottom portion 12 of a roof box on a crossbar 20. The mounting arrangement 200 comprises a base 102 supported on an upper side of the bottom portion 12. A clamping member 150 is rotatably held on the base 102.

The base 102 comprises a guiding portion 180 provided on the upper side of the base 102. The guiding portion 180 slidably supports a second operating portion or control portion 220 which is torque transmittingly coupled with the clamping member 150. The guiding portion 180 may comprise a guiding ridge 188 that acts as a support for the control portion 220. The guiding portion 180 may be provided in other embodiments in a similar manner.

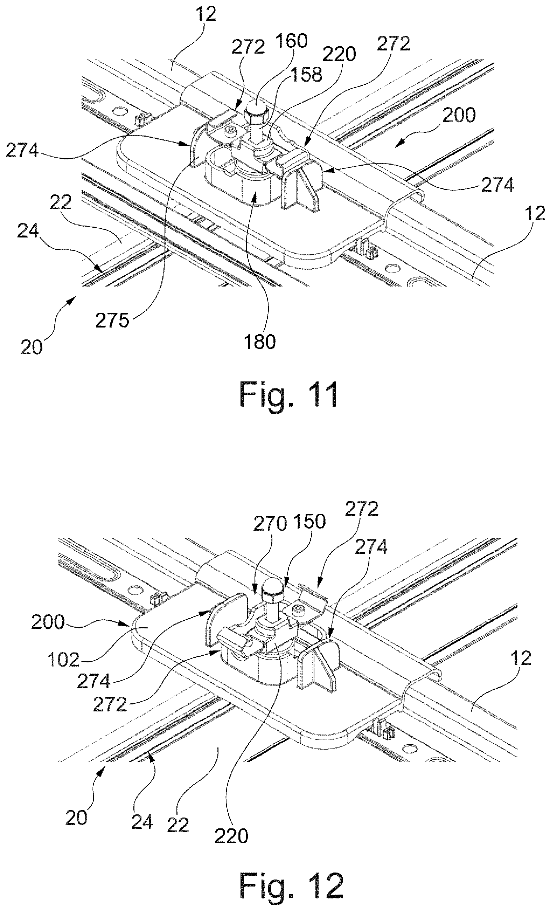

The guiding portion 180 comprises a second stop portion 184 which limits a rotation of the control portion 220 in clockwise direction. The control portion 220 is movable about 90 degrees between second stop portion 184 and another first stop portion 182 which is not shown in Fig. 15 but may be configured like first stop portion 182 shown in Fig. 4. Each stop portion may comprise a recess for arresting the control portion 220 therein. Fig. 11 shows a state in which the control portion 220 is positioned in the first stop portion 182 and Fig. 12 shows a state in which the control portion 220 is positioned in the second stop portion 184. In this state, the engaging portion 152 is in the locking position. The stop portion may be configured to not only limit a rotation region of the control portion 220 but is also configured to prevent that the control portion 220 is able to move out of the respective stop portion. For example, in a clamping state of the mounting arrangement the control member 220 may be pushed into the recess in the second stop portion 184 by the tightening member 210.

The control portion 220 comprises a non-round opening 128 and the clamping member 150 comprises a non-round section 156 slidably received in the control portion 220 such that only a translatory movement of the clamping member 150 relative to the control portion 220 is possible. On the other hand, a rotation of the control portion 220 leads to a corresponding rotation of the clamping member 150. The control portion 220 may comprise or may be a carrier 222. The carrier 222 may be a beam. On its opposite end portions, the control portion 220 or carrier 222 carries a spring member 271 comprising the locking portion 272. Regarding the function of the locking portions 272, it is referred to the other embodiments described therein. The locking portions 272 are configured to torque transmittingly connect the force input portion 112 with the control portion 220. Accordingly, when control portion 220 and force input portion 112 are coupled, control portion 220 rotates together with the force input portion 112 of first operating portion 210. A tightening member 210 having a torque limiting capability may be provided as a first operating portion.

The mounting arrangement of Fig. 15 is shown in the state which is shown in Figs. 7, 8 and 12. The engaging portion 152 is in the unlocking position that allows to insert the engaging portion 152 through the narrow opening of the T-slot 24.

The tightening member 210 comprises the force input portion 112 and a force output portion 113. The force input portion 112 and the force output portion 113 are coupled via the first force transfer section 304 of a plate spring 302 and the second force transfer section 314 such that a torque applied on the force input portion 112, for example in clockwise direction, is transferred to the force output portion 113 until a predetermined torque is exceeded. In modifications, other constructions of torque limiting mechanisms may be used between the force input portion 112 and the force output portion 113. When the force input portion 112 is rotated, for example counterclockwise, a torque is transferred to the force output portion 113 without limitation. In a modification, the tightening member may be a tightening member without torque limiting capability.

The force output portion 113 comprises a mechanical interface 115 by means of which the force output portion 113 is coupled to the clamping member 150. The clamping member 150 is again a T-bolt with an elongate force transfer portion 154 and an engaging portion 152.

The clamping member 150 is configured as described in connection with other embodiments disclosed herein. The engaging portion 152 extends in cross direction to the main extension direction of the force transfer portion 154. The engaging portion 152 is provided at a lower end of the elongate force transfer portion 154. On an opposite end portion, a first coupling section 158 is provided on the elongate force transfer portion 154. The first coupling section 158 is configured to be engaged with the mechanical interface 115 in the force output portion 113. In the present configuration, the force output portion 113 and the first coupling section 158 are coupled such that a rotation of the output portion 113 leads to a movement of the clamping member 150 in the direction of the rotation axis of the tightening member 210. For example, the configuration may be such that a clockwise rotation of the tightening member 210 relative to the first coupling section 158 leads to a translatory movement of the clamping member 150 relative to the tightening member 150.

The first coupling section 158 is a threaded portion with an external thread. The mechanical interface 115 comprises a threaded portion with an internal thread configured to receive the first coupling section 158. The mechanical interface 115 may comprise a nut 116 received in an accommodating portion provided in a lower portion of the output portion 113. The nut 116 may be molded into the output portion 113 or may be inmolded in the output portion 113.

On an upper end or free end of the threaded portion, a stop member 160, for example a cap nut, is provided which limits a movement range of the clamping member 150 relative to the tightening member 210. The clamping member 150 fully extends through the operating portion 110, 210. The stop member 160 and the engaging portion 152 are provided on opposite ends of the force transfer portion 154. In Fig. 15, a state is shown in which the tightening member 210 is positioned at an uppermost position on the first coupling section, more precisely a position in which an upper portion of the force input portion 112 is in contact with the stop member 160. This corresponds to a state where the tightening member 210 is rotated counterclockwise to the maximum possible extent so that a further counterclockwise rotation of the tightening member 210 is only possible together with the clamping member 150 and not relative to the clamping member 150. When the tightening member 210 is further rotated in counterclockwise direction, the clamping member 150 is rotated together with the tightening member 210 which allows to move the engaging portion 152 from the locking position to the unlocking position.

A method of operating the mounting arrangement 200 of Figs. 7 to 12 and 15 for fixing an object, for example a roof box, to a crossmember or crossbar 22 with a T-slot 24 will be described in the following starting from a state in which the engaging portion 152 is in the release position and in the unlocking position (see Figs. 7, 8, 12 and 15). The method comprises the steps of arranging the roof box with the mounting arrangement on the crossbar 22, arranging the engaging portion 152 in the T-rail, and rotating the first operating portion 210 in only one direction, for example clockwise, wherein rotating the first operating portion 210 first arranges the engaging portion 152 in the locking position (see Figs. 9, 10 and 11) and uncouples the second operating portion 220 from the first operating portion 210, and then moves the engaging portion 152 to the clamping position.

Also in this configuration, the first operating portion 210 is supported on the second operating portion which is in turn supported on the base 102. The first operating portion 210 applies a clamping force on the second operating portion 220 which is therefore securely held in the recess of the second stop portion 184.

For removing the mounting arrangement 200 from the crossbar 22, the first operating portion 210 is rotated in opposite direction to the tightening direction, for example counterclockwise. When rotating the first operating portion 210 counterclockwise, the distance between engaging portion 152 and first operating portion 210 is enlarged thereby moving the engaging portion 152 to the release position or allowing the engaging portion 152 to move to the release position, for example supported by a return spring. The second operating portion 220 or control portion 220 is still held stationary in the second stop portion 184 and between the uncoupling portions 274.

The first operating portion 210 is rotated counterclockwise until its upper end contacts the stop member 160. From this state on, further rotating the first operating portion 210 counterclockwise also rotates the clamping member 150 and engaging portion 152. Since the second operating portion 220 is torque transmittingly coupled to the clamping member 150, the second operating portion 220 is also rotated together with the clamping member 150. In this way, the locking portions 272 are rotated away from the uncoupling portions 274 and are no longer prevented from moving to the coupling position in which the locking portions 272 can engage with the locking recess 214. The locking portions 272 move radially outwards. In case the locking recesses 214 are not aligned with the locking portions 272, the locking portions 272 may rest on a radially inner surface of the first operating portion 210, for example on a radial inner wall of a cylindrical lower portion of the force input portion 112. This does not influence the function of the overall configuration. At least when the first operating portion 210 is then again rotated in clockwise direction or tightening direction and a torque transmission between radial inner wall and locking portion 272 is too high, the first operating portion 210 or the force input portion 112 may rotate relative to the locking portions 272 until the locking recesses 214 are aligned with the locking portions 272. The locking portions 272 may then move into the locking recesses 214 thereby torque-transmittingly locking the first operating portion 210 with the second operating portion 220 and allowing a higher torque transfer for moving the engaging portion 152 to the locking position at which the locking portions 272 are then disengaged from the locking recesses 214.

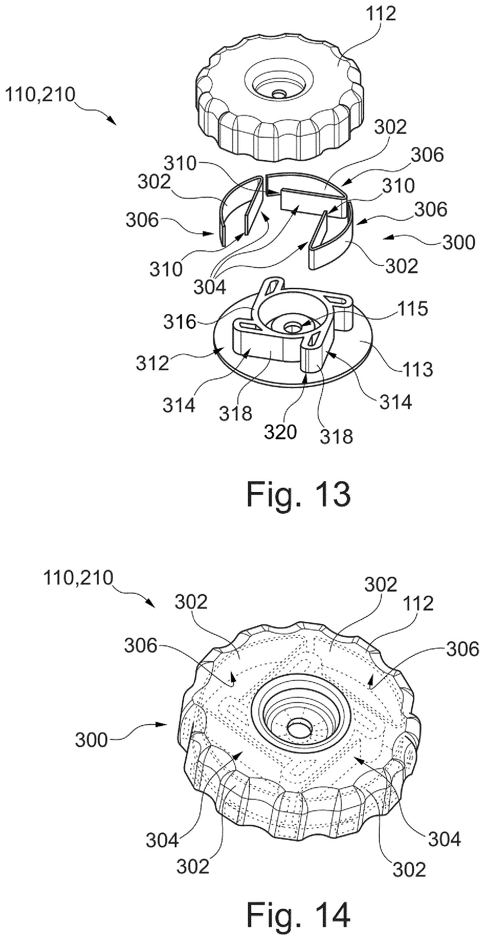

Figs. 13 and 14 show a possible configuration of a tightening member 110 that may be used in the mounting arrangements described before as first operating portion 110.

The tightening member 110 is a tightening knob. The tightening member 110 comprises a force input portion 112 configured to be grasped and rotated by a user. The tightening member 110 comprises a force output portion 113. The force output portion 113 comprises a mechanical interface for receiving a force transfer portion 154 or a mechanical interface configured to be coupled to a force receiving portion 156 of a clamping mechanism. In the embodiment, the force output portion 113 is configured to receive the threaded portion 158, for example such that a clockwise rotation of the force output portion 113 reduces a distance between the tightening member 110 and the engaging portion 152 and a rotation in opposite direction increases a distance between the tightening member 110 and the engaging portion 152.

The tightening member 110 comprises a torque limiting arrangement 300 operatively coupling the force input portion 112 and the force output portion 113. The torque limiting arrangement 300 is configured to release a force transfer between the force input portion 112 and the force output portion 113 by movement of a first force transfer section 304 relative to a second force transfer section 314 in radial direction.

The first force transfer section 304 is spring-mounted on the force input portion 112. Accordingly, upon application of a predetermined force, the force transfer section 304 may be moved relative to the force input portion 112.

The first force transfer section 304 is straight and extends in or along a plane which runs in parallel with a rotation axis of the force input portion 112.

The first force transfer section 304 is cantilevered on the force input portion 112 via a fixation section 306. The first force transfer section 304 is held on the force input portion 112 on one end thereof and its other end is a free end.

In the embodiment shown in Figs. 13 and 14, the first force transfer section 304 and the fixation section 306 together form a force transfer member 302 and are integrally formed in a single piece. In the embodiment, a plate spring is provided that comprises the first force transfer sect4ion 304 and the fixation section 306. The plate spring can be made from cutting and bending a metal sheet.

In the embodiment, the torque limiting arrangement 300 comprises four plate springs 302 each comprising the first force transfer section 304 and the fixation section 306.

The plate spring 302 is bent in a V-shape with the fixation section 306 forming a first leg and the first force transfer section 304 forming a second leg. The fixation section 306 is configured to follow an inner contour of the force input portion 112. The fixation section 306 is curved. The force input portion 112 is cup-shaped and comprises a hollow cylindrical portion in which the fixation section 306 and the first force transfer section 304 are accommodated. The fixation section 306 is fixedly held on the radially inner surface of the hollow cylindrical portion.

In the embodiment, the first force transfer section 304 is configured as a force application portion and the second force transfer section 314 is configured as a force receiving portion.

The torque limiting arrangement 300 is configured to limit a torque transfer from the force input portion 112 to the force output portion 113 only in a first rotation direction of the force input portion 112, and to not limit the torque transfer in a second rotation direction opposite to the first rotation direction. More precisely, in the embodiment, when the tightening member 110 is rotated clockwise, the torque limiting function is active. On the other hand, no torque limitation is provided when the tightening member 110 is rotated in opposite direction.

The second force transfer section 314 is provided on a force transfer portion 312 provided on or integrally formed with the force output section 113.

The force transfer portion 312 may comprise multiple force transfer sections 314 or force receiving portions. In the embodiment, four force receiving portions are provided corresponding to the number of force application portions.

The force transfer portion 312 may be formed as a gearwheel with the force transfer sections 314 forming teeth of the gearwheel,

Each force transfer section 314 may be formed by a tangential protrusion 318 protruding from a substantially circular cylindrical portion 316 on the force output section 113.

A free end portion 320 of the tangential protrusion may be rounded to allow the first force transfer section 304 to glide over the tangential protrusion when a predetermined torque applied in clockwise direction on the force input portion 112 is exceeded. On the other hand, when rotating the force input portion 112 in opposite direction, an end face 310 of the first force transfer section 304 abuts against the tangential protrusion 318 and transfers a torque on the force output portion 113 without torque limitation.

### ASPECTS

In the following, different configurations and/or different aspects are represented in itemized structure in addition to the subject matter of claim 1 and the dependent claims and in addition to the explanations and configurations given in the introductory portion of this specification. It is to be noted that the below specific feature combinations are not intended to limit the disclosure to such specific feature combinations. By contrast, the below feature combinations merely provide different examples having improved capabilities. Features and embodiments as defined in the itemized configurations may be combined with other features and embodiments of other itemized configurations, as well as with one or more of the features of configurations described in the summary section and the detailed description section.
Aspect A1: Mounting arrangement (100) comprising
   a base (102),
   an engaging portion (152) configured to engage with an engaging section (26, 28) of a roof rack (20), for example an abutment surface (26, 28) of a T-slot (24),
   wherein said engaging portion (152) is movable relative to said base (102) in a first direction between a locking position and an unlocking position, and in a second direction different from the first direction between a release position and a clamping position,
   wherein said mounting arrangement (100, 200) may optionally comprise a first stop portion (182) defining said unlocking position and/or may comprise a second stop portion (184) defining said locking position, wherein said first stop portion (182) and/or said second stop portion (184) may be configured to arrest said engaging portion (152) in said unlocking position and/or said locking position.
Aspect A2: Mounting arrangement (100) according to aspect A1,
   wherein said mounting arrangement (100) is configured such that said engaging portion (152) is only movable from said release position to said clamping position when said engaging portion (152) is in said locking position.
Aspect A3: Mounting arrangement (100) according to aspect 1 or aspect 2,
   further comprising a locking mechanism (170) configured to at least lock a movement of the engaging portion (152) from the release position to the clamping position,
   wherein said locking mechanism (170) is configured to allow said movement of said engaging portion (152) from said release position to said clamping position when said engaging portion (152) is in said locking position.
Aspect A4: Mounting arrangement (100) according to aspect A3, further comprising
   a first operating portion (110) supported on said base (102) and movable by a user,
   wherein said first operating portion (110) is operatively coupled with said engaging portion (152) for moving said engaging portion (152) between said release position and said clamping position,
   a second operating portion (120) operatively coupled with said engaging portion (152) for moving said engaging portion (152) between said locking position and said unlocking position,
   wherein said locking mechanism (170; 270) may be configured to at least lock a movement of said first operating portion (110) relative to said second operating portion (120) until said engaging portion (152) is in said locking position.
Aspect A5: Mounting arrangement (100, 200) according to one of aspects A1 to A4**,**
   wherein said mounting arrangement (100) is configured to arrest said engaging portion (152) at least in said locking position and optionally in said unlocking position.
Aspect A6: Mounting arrangement (100) according to aspect A4 or A5,
   wherein said second operating portion (120) is torque transmittingly coupled with said engaging portion (152), for example via an elongate force transfer portion (154), wherein said second operating portion (120) may comprise a non-round opening (128) in which a corresponding non-round section (156) of said elongate force transfer portion (154) is received slidable relative to said second operating portion (120) in an extension direction of said non-round opening (128).
Aspect A7: Mounting arrangement (100) according to aspect A6,
   wherein a movement of said second operating portion (120) is allowed between a first position corresponding to said unlocking position of said engaging portion (152) and a second position corresponding to said locking position of said engaging portion (152),
   wherein said first position and said second position may define end positions of a movement path of said second operating portion (120),
   wherein an angular movement region of said second operating portion (120) between said first position and said second position may be 90°.
Aspect A8: Mounting arrangement (100) according to aspect A7,
   wherein said mounting arrangement (100) comprises a first stop portion (182) defining said first position and a second stop portion (184) defining said second position,
   wherein said first stop portion (182) and/or said second stop portion (184) may be configured to arrest said second operating portion (120) in place.
Aspect A9: Mounting arrangement (100, 200) according to aspect A8,
   wherein said mounting arrangement (100) is configured such that said second operating portion (120) is automatically arrested in said first stop portion (182) and/or such that said second operating portion (120) is automatically arrested in said second stop portion (184).
Aspect A10: Mounting arrangement (100) according to aspect A9,
   wherein said first stop portion (182) and said second stop portion (184) may comprise a recess for partially accommodating said second operating portion (120) so as to arrest said second operating portion (120) in place,
   wherein said mounting arrangement may be configured such that said second operating portion (120) is urged into the respective recess, for example by a spring or by said first operating portion (110).
Aspect A11: Mounting arrangement (100) according to aspect A10,
   wherein said first stop portion (182) and said second stop portion (184) are connected by a guiding ridge (188) provided on said base (102) and configured to slidably support said second operating portion (120) when moving between said first stop portion (182) and said second stop portion (184).
Aspect A12: Mounting arrangement (100) according to one of aspects A4 to A11,
   wherein said first operating portion (110) is configured rotatable, and
   wherein said locking mechanism (170) comprises a rotation locking arrangement (172) configured to block a rotational movement of said first operating portion (110) relative to said base (102) by establishing a mechanical connection between first operating portion (110) and base (102).
Aspect A13: Mounting arrangement (100) according to aspect A12,
   wherein said rotation locking arrangement (172) comprises a fixation section (178) fixedly coupled to said base (102) and a locking section (174) movable between a protruding position in which said locking section (174) is engaged with a locking section receiving portion (114) on said first operating portion (110), and a retracted position in which said locking section (174) is disengaged from said locking section receiving portion (114),
   wherein said rotation locking arrangement (172) may be integrally formed as a single piece and/ or may be formed from a metal sheet, in particular by cutting and bending a metal sheet.
Aspect A14: Mounting arrangement (100) according to aspect A13,
   wherein said locking section (174) is movable from said protruding position to said retracted position by an interaction of said second operating portion (120) with said rotation locking arrangement (172).
Aspect A15: Mounting arrangement according to aspect A14,
   wherein said second operating portion (120) is movable relative to said base (102), for example rotatable, in particular rotatable about the same axis as the first operating portion (110), between a restraining position in which said second operating portion (120) applies a pushing force on said rotation locking arrangement (172) to move said locking section (174) to said retracted position or to hold said locking section (174) in said retracted position, and an inactive position in which said second operating portion (120) allows said locking section (174) to move to said protruding position.
Aspect A16: Mounting arrangement (100) according to aspect A15,
   wherein said second operating portion (120) comprises a lever (126) with a force application portion (122) configured to abut against a force receiving surface (176) of said rotation locking arrangement (172) to urge said locking section (174), for example under deformation of said rotation locking arrangement (172), to said retracted position,
   wherein said second operating portion (120) may comprise a gripping portion (124) configured to be grasped by a user,
   wherein said gripping portion (124) and said force application portion (122) may be provided on opposite end portions of said second operating portion (120).
Aspect A17: Mounting arrangement (100) according to aspect **A4** to A11,
   wherein said locking mechanism (270) is configured to torque transmittingly couple said second operating portion (120) with said first operating portion (110) until said engaging portion (152) is positioned in said locking position, and to decouple said second operating portion (120) from said first operating portion (110) when said engaging portion (152) is positioned in said locking position.
Aspect A18: Mounting arrangement (100) according to aspect A17,
   wherein said locking mechanism (270) comprises a locking portion (272) movable between a coupling position in which a torque transmission between said second operating portion (120) and said first operating portion (110) is established, and an uncoupling position in which said torque transmission is prevented.
Aspect A19: Mounting arrangement (100) according to aspect A18,
   wherein said locking mechanism (270) further comprises an uncoupling portion (274) configured to effect a movement of said locking portion (272) towards said uncoupling position upon moving said engaging portion (152) to said locking position.
Aspect A20: Mounting arrangement (100) according to aspect A19,
   wherein said uncoupling portion (274) comprises a guiding member, for example a protrusion protruding from said base (102), wherein said guiding member is configured to be contacted by said locking portion (272) upon moving said engaging portion (152) to said locking position and to guide said locking portion (272) to said disengaging position.
Aspect A21: Mounting arrangement (100) according to aspect A18, aspect A19 or aspect A20, wherein said locking portion (272) is a portion of a spring member, for example made from cutting and bending a metal sheet.
Aspect A22: A method of mounting a roof box to a crossbar comprising a T-rail, the method comprising the steps of:
   - providing a mounting arrangement (100) according to aspects A12 toA16,
   - arranging the roof box on the crossbar,
   - arranging the engaging portion (152) in the unlocking and release position in the T-rail,
   - operating the second operating portion (120) such that the engaging portion (152) is arranged in the locking position, followed by
   - operating the first operating portion (110) such that the engaging portion (152) is arranged in the clamping position.
Aspect A23: A method of mounting a roof box to a crossbar comprising a T-rail, the method comprising the steps of:
   - providing a mounting arrangement (100) according to aspects A17 to A21,
   - arranging the roof box on the crossbar,
   - arranging the engaging portion (152) in the unlocking and release position in the T-rail, and
   - operating the first operating portion (110) such that the engaging portion (152) is arranged in the locking position and the clamping position.
Aspect B1: Tightening member (110), for example a first operating portion (110), in particular a first operating portion (110) for a mounting arrangement according to one of aspects **A4** to A21, in particular a tightening knob, comprising,
   a force input portion (112) configured to be grasped and rotated by a user,
   a force output portion (113), for example a mechanical interface (115) for force transmittingly receiving a force transfer portion (154) or a mechanical interface configured to be coupled to a force receiving portion (156) of a clamping mechanism, and
   a torque limiting arrangement (300) operatively coupling said force input portion (112) and said force output portion (113),
   wherein said torque limiting arrangement (300) is configured to release a force transfer between said force input portion (112) and said force output portion (113) by movement of a first force transfer section (304) relative to a second force transfer section (314) in radial direction.
Aspect B2: Tightening member (110) according to aspect B1,
   wherein said first force transfer section (304) is spring-mounted on said force input portion (112).
Aspect B3: Tightening member (110) according to aspect B1 or aspect B2,
   wherein said first force transfer section (304) is straight and extends in or along a plane which runs in parallel with a rotation axis of the force input portion (112).
Aspect B4: Tightening member (110) according to one of aspects B1 to B3,
   wherein said first force transfer section (304) is cantilevered on said force input portion (112) via a fixation section (306).
Aspect B5: Tightening member (110) according to aspect B4,
   wherein said first force transfer section (304) and said fixation section (306) together form a force transfer member (302) and may be integrally formed in a single piece, for example made from cutting and/or bending a metal sheet.
Aspect B6: Tightening member (110) according to B5,
   wherein said torque limiting arrangement (300) comprises at least one plate spring (302) comprising said first force transfer section (304) and said fixation section (306) for supporting said plate spring (302) on said force input portion (112).
Aspect B7: Tightening member (110) according to aspect B6, wherein said plate spring (302) is bent in a V-shape with the fixation section (306) forming a first leg and the first force transfer section (304) forming a second leg.
Aspect B8: Tightening member (110) according to one of aspects B4 to B7,
   wherein said fixation section (306) is configured to follow an inner contour of said force input portion (112), wherein said fixation section (306) may be curved, wherein said force input portion (112) may be cup-shaped and/or comprise a hollow cylindrical portion configured to accommodate said fixation section (306) and said first force transfer section (304) therein.
Aspect B9: Tightening member (110) according to one of aspects B4 to B8,
   wherein said first force transfer section (304) is configured as a force application portion and said second force transfer section (314) is configured as a force receiving portion.
Aspect B10: Tightening member (110) according to aspect B9,
   wherein said torque limiting arrangement (300) is configured to limit a torque transfer from said force input portion (112) to said force output portion (113) only in a first rotation direction of said force input portion (112), and to not limit said torque transfer in a second rotation direction opposite to the first rotation direction.
Aspect B11: Tightening member (110) according to aspect B10,
   wherein said second force transfer section (314) is provided on a force transfer portion (312) provided on or integrally formed with said force output section (113),
   wherein said force transfer portion (312) may comprise multiple second force transfer sections (314),
   wherein said force transfer portion (312) may be formed as a gearwheel with said force transfer sections (314) forming teeth of said gearwheel,
   wherein each force transfer section (314) may be formed by a tangential protrusion (318) protruding from a substantially circular cylindrical portion (316),
   wherein a free end portion (320) of said tangential protrusion may be rounded to allow said first force transfer section (304) to glide over said tangential protrusion when a predetermined torque is exceeded.
Aspect C1: Mounting arrangement (100), for example a mounting arrangement (100) according to one of aspects A1 to A21 or D1 to D26, or preferably a mounting arrangement according to aspects A1 to A21 or D1 to D26 in combination with a tightening member according to aspects B1 to B11 as a first operating portion (110), said mounting arrangement (100) comprising
   a base (102) configured to be movably supported on an object (12) to be fixed, wherein said object (12) may be a bottom portion of a roof box,
   an engaging portion (152) supported on said base (102) and configured to engage with an engaging section (26, 28) of a roof rack (20), for example an abutment surface (26, 28) of a T-slot (24), and
   a positioning portion (104, 106) arranged at a distance from said engaging portion (152) and configured for positioning said base (102) in an engaging position in which said engaging portion (152) is positioned for an engagement with said engaging section (26, 28).
Aspect C2: Mounting arrangement (100, 200) according to aspect C1,
   wherein said positioning portion (104, 106) is provided on a lower side of said base (102) such that said positioning portion (104, 106) is accessible by a user and/or may contact a side of a crossbar (22).
Aspect C3: Mounting arrangement (100, 200) according to aspect C1 or aspect C2,
   wherein said positioning portion (104, 106) protrudes from said base (102).
Aspect C4: Mounting arrangement (100, 200) according to one of aspects C1 to C3,
   wherein said positioning portion (104, 106) is arranged at a distance from said engaging portion (152) corresponding to a distance between an end of a crossbar (22), for example a front end or a rear end, and a T-slot so that said engaging portion (152) is correctly positioned with respect to said T-slot when said positioning portion (104, 106) is in contact with said crossbar (22).
Aspect C5: Mounting arrangement (100, 200) according to one of aspects C1 to C4,
   wherein said base (102) is configured to be in a first direction linearly movably supportable on said object (12) to be fixed, for example configured to be linearly movably guided on said object (12), wherein said base (102) may comprise a lower surface being formed to be linearly guided on said object (12), wherein said lower surface may comprise a recess or protrusion for engaging with a corresponding portion on said object (12).
Aspect C6: Mounting arrangement (100, 200) according to aspect C5,
   wherein said positioning portion (104, 106) is arranged spaced apart from said engaging portion (152) in said first direction.
Aspect C7: Mounting arrangement (100, 200) according to one of aspects C1 to C6,
   wherein said positioning portion (104, 106) comprises a dimension allowing it to extend through said object (12) and to protrude from said object (12) on an opposite side.
Aspect C8: Mounting arrangement (100, 200) according to one of aspects C1 to C7,
   comprising two of said positioning portions (104, 106), a front positioning portion (104) and a rear positioning portion (106), wherein said engaging portion (152) is provided between said positioning portions (104, 106).
Aspect C9: Mounting arrangement (100, 200) according to one of aspects C1 to C7,
   wherein said engaging portion (152) and said positioning portion (104, 106) are arranged on the same side of said base (102).
Aspect C10: Roof box comprising,
   a bottom portion (12),
   a mounting arrangement (100, 200) according to one of aspects C1 to C9,
   wherein said engaging portion (152) and said base (102) are arranged on opposite sides of the bottom portion (12), and
   wherein said positioning portion (104, 106) extends through said bottom portion (12) and protrudes from said bottom portion (12) on an opposite side.
Aspect D1: Mounting arrangement (100), for example the mounting arrangement according to one of aspects A1 to A21 or one of aspects C1 to C9, the latter mounting arrangements preferably in combination with a tightening member according to aspects B1 to B11 as a first operating portion (110), comprising
   a base (102),
   an engaging portion (152) configured to engage with an engaging section (26, 28) of a roof rack (20), for example an abutment surface (26, 28) of a T-slot (24),
   wherein said engaging portion (152) is movable relative to said base (102) in a first direction between a locking position and an unlocking position, and in a second direction different from the first direction between a release position and a clamping position.
Aspect D2: Mounting arrangement (100, 200) according to aspect D1,
   wherein said mounting arrangement (100) is configured to arrest said engaging portion (152) at least in said locking position and optionally in said unlocking position.
Aspect D3: Mounting arrangement (100) according to aspect D2,
   wherein said mounting arrangement (100) comprises a first stop portion (182) defining said unlocking position and a second stop portion (184) defining said locking position,
   wherein said first stop portion (182) and/or said second stop portion (184) may be configured to arrest said engaging section (152) in place.
Aspect D4: Mounting arrangement (100, 200) according to aspect A8,
   wherein said mounting arrangement (100) is configured such that said engaging portion (152) is automatically arrested by means of said first stop portion (182) and/or such that said engaging portion (152) is automatically arrested by said second stop portion (184).
Aspect D5: Mounting arrangement (100) according to aspect D4,
   wherein said first stop portion (182) and said second stop portion (184) may comprise a recess for partially accommodating a control portion (120) operatively coupled with said engaging portion (152) so as to arrest said control portion (120) in place,
   wherein said mounting arrangement may be configured such that said control portion (120) is urged into the respective recess, for example by a spring.
Aspect D6: Mounting arrangement (100) according to aspect D5,
   wherein said first stop portion (182) and said second stop portion (184) are provided on said base (102).
Aspect D7: Mounting arrangement (100) according to aspect D6,
   wherein said first stop portion (182) and said second stop portion (184) are connected by a guiding ridge (188) provided on said base (102) and configured to slidably support said control portion (120) when moving between said first stop portion (182) and said second stop portion (184).
Aspect D8: Mounting arrangement (100) according to one of aspects D5 to D7,
   wherein said control portion (120) is torque transmittingly coupled with said engaging portion (152), for example via an elongate force transfer portion (154), wherein said control portion (120) may comprise a non-round opening (128) in which a corresponding non-round section (156) of said elongate force transfer portion (154) is received, for example slidable relative to said second operating portion (120) in an extension direction of said non-round opening (128), and
   wherein said control portion (120) is slidably supported on said base (102).
Aspect D9: Mounting arrangement (100) according to aspect D8,
   wherein a movement of said control portion (120) is allowed between a first position corresponding to said unlocking position of said engaging portion (152) and a second position corresponding to said locking position of said engaging portion (152),
   wherein said first position and said second position may define end positions of a movement path of said control portion (120),
   wherein an angular movement region of said control portion (120) between said first position and said second position may be 90°.
Aspect D10: Mounting arrangement (100) according to aspect D8 or D9,
   wherein said first stop portion (182) and/or said second stop portion (184) are configured to arrest said control portion (120) in place.
Aspect D11: Mounting arrangement (100, 200) according to aspect D10,
   wherein said mounting arrangement (100) is configured such that said control portion (120) is automatically arrested by means of said first stop portion (182) and/or such that said control member (120) is automatically arrested by said second stop portion (184).
Aspect D12: Mounting arrangement (100) according to aspect D11,
   wherein said mounting arrangement is configured such that said control portion (120) is urged into the respective recess, for example by a spring.
Aspect D13: Mounting arrangement (100) according to one of aspects D5 to D12,
   wherein said control portion (120) may be configured as a beam extending perpendicular to a movement direction, for example a rotation direction, of the engaging portion (152).
Aspect D14: Mounting arrangement (100) according to one of aspects D5 to D13, further comprising
   a first operating portion (110) supported on said base (102) and movable by a user,
   wherein said first operating portion (110) is operatively coupled with said engaging portion (152) for moving said engaging portion (152) between said release position and said clamping position, and
   wherein said control portion (120) is configured as a second operating portion (120) operatively coupled with said engaging portion (152) for moving said engaging portion (152) between said locking position and said unlocking position or wherein said control portion (120) is configured as a portion of said second operating portion, for example a lower portion of the second operating portion.
Aspect D15: Mounting arrangement (100) according to aspect D14,
   wherein said mounting arrangement (100) is configured such that said engaging portion (152) is only movable from said release position to said clamping position when said engaging portion (152) is in said locking position.
Aspect D16: Mounting arrangement (100) according to aspect D15,
   further comprising a locking mechanism (170) configured to at least lock a movement of the engaging portion (152) from the release position to the clamping position,
   wherein said locking mechanism (170) is configured to allow said movement of said engaging portion (152) from said release position to said clamping position when said engaging portion (152) is in said locking position.
Aspect D17: Mounting arrangement (100) according to aspect D16,
   wherein said first operating portion (110) is configured rotatable, and
   wherein said locking mechanism (170) comprises a rotation locking arrangement (172) configured to block a rotational movement of said first operating portion (110) relative to said base (102) by establishing a mechanical connection between first operating portion (110) and base (102).
Aspect D18: Mounting arrangement (100) according to aspect D17,
   wherein said rotation locking arrangement (172) comprises a fixation section (178) fixedly coupled to said base (102) and a locking section (174) movable between a protruding position in which said locking section (174) is engaged with a locking section receiving portion (114) on said first operating portion (110), and a retracted position in which said locking section (174) is disengaged from said locking section receiving portion (114),
   wherein said rotation locking arrangement (172) may be integrally formed as a single piece and/ or may be formed from a metal sheet, in particular by cutting and bending a metal sheet.
Aspect D19: Mounting arrangement (100) according to aspect D18,
   wherein said locking section (174) is movable from said protruding position to said retracted position by an interaction of said second operating portion (120) with said rotation locking arrangement (172).
Aspect D20: Mounting arrangement according to aspect D19,
   wherein said second operating portion (120) is movable relative to said base (102), for example rotatable, in particular rotatable about the same axis as the first operating portion (110), between a restraining position in which said second operating portion (120) applies a pushing force on said rotation locking arrangement (172) to move said locking section (174) to said retracted position or to hold said locking section (174) in said retracted position, and an inactive position in which said second operating portion (120) allows said locking section (174) to move to said protruding position.
Aspect D21: Mounting arrangement (100) according to aspect D20,
   wherein said second operating portion (120) comprises a lever (126) with a force application portion (122) configured to abut against a force receiving surface (176) of said rotation locking arrangement (172) to urge said locking section (174), for example under deformation of said rotation locking arrangement (172), to said retracted position,
   wherein said second operating portion (120) may comprise a gripping portion (124) configured to be grasped by a user,
   wherein said gripping portion (124) and said force application portion (122) may be provided on opposite end portions of said second operating portion (120).
Aspect D22: Mounting arrangement (100) according to aspect D14 to D21,
   wherein said locking mechanism (270) is configured to torque transmittingly couple said second operating portion (120) with said first operating portion (110) until said engaging portion (152) is positioned in said locking position, and to decouple said second operating portion (120) from said first operating portion (110) when said engaging portion (152) is positioned in said locking position.
Aspect D23: Mounting arrangement (100) according to aspect D22,
   wherein said locking mechanism (270) comprises a locking portion (272) movable between a coupling position in which a torque transmission between said second operating portion (120) and said first operating portion (110) is established, and an uncoupling position in which said torque transmission is prevented.
Aspect D24: Mounting arrangement (100) according to aspect D23,
   wherein said locking mechanism (270) further comprises an uncoupling portion (274) configured to effect a movement of said locking portion (272) towards said uncoupling position upon moving said engaging portion (152) to said locking position.
Aspect D25: Mounting arrangement (100) according to aspect D24,
   wherein said uncoupling portion (274) comprises a guiding member, for example a protrusion protruding from said base (102), wherein said guiding member is configured to be contacted by said locking portion (272) upon moving said engaging portion (152) to said locking position and to guide said locking portion (272) to said disengaging position.
Aspect D26: Mounting arrangement (100) according to aspect D23, aspect D24 or aspect D25, wherein said locking portion (272) is a portion of a spring member, for example made from cutting and bending a metal sheet.
Aspect E1: Mounting arrangement (200), for example the mounting arrangement according to one of aspects A1 to A21, one of aspects C1 to C8, or one of aspects D1 to D26, the latter mounting arrangements preferably in combination with a tightening member according to aspects B1 to B11 as a first operating portion (110), said mounting arrangement (200) comprising
   a base (102),
   an engaging portion (152) configured to engage with an engaging section (26, 28) of a roof rack (20), for example an abutment surface (26, 28) of a T-slot (24),
   wherein said engaging portion (152) is movable relative to said base (102) in a first direction between a locking position and an unlocking position, and in a second direction different from the first direction between a release position and a clamping position.
Aspect E2: Mounting arrangement (200) according to aspect E1,
   wherein said mounting arrangement (200) is configured to automatically change said movement of the engaging portion (152) from said first direction to said second direction when the engaging portion (152) reaches said locking position.
Aspect E3: Mounting arrangement (200) according to aspect E1, further comprising
   a first operating portion (210) supported on said base (102) and movable by a user,
   wherein said first operating portion (210) is operatively coupled with said engaging portion (152) for moving said engaging portion (152) between said release position and said clamping position,
   a control portion (220) operatively coupled with said engaging portion (152) for moving said engaging portion (152) between said locking position and said unlocking position,
   a locking mechanism (270) configured to at least lock a movement of said first operating portion (210) relative to said control portion (220) until said engaging portion (152) is in said locking position.
Aspect E4: Mounting arrangement (200) according to aspect E3,
   wherein said locking mechanism (270) is configured to torque transmittingly couple said control portion (220) with said first operating portion (210) until said engaging portion (152) is positioned in said locking position, and to decouple said control portion (220) from said first operating portion (210) when said engaging portion (152) is positioned in said locking position.
Aspect E5: Mounting arrangement (200) according to aspect E4,
   wherein said locking mechanism (270) comprises a locking portion (272) movable between a coupling position in which a torque transmission between said control portion (220) and said first operating portion (210) is established, and an uncoupling position in which said torque transmission is prevented.
Aspect E6: Mounting arrangement (200) according to aspect E5,
   wherein said locking mechanism (270) further comprises an uncoupling portion (274) configured to effect a movement of said locking portion (272) towards said uncoupling position upon moving said engaging portion (152) to said locking position.
Aspect E7: Mounting arrangement (200) according to aspect E6,
   wherein said uncoupling portion (274) comprises a guiding member, for example a protrusion protruding from said base (102), wherein said guiding member is configured to be contacted by said locking portion (272) upon moving said engaging portion (152) to said locking position and to guide said locking portion (272) to said disengaging position.
Aspect E8: Mounting arrangement (200) according to aspect E5, aspect E6 or aspect E7,
   wherein said locking portion (272) is a portion of a spring member, for example made from cutting and bending a metal sheet.
Aspect E9: Mounting arrangement (200) according to one of aspects E5 to E8,
   wherein said first operating portion (210) comprises a locking recess (214) configured to receive said locking portion (272) when it is in said coupling position,
   wherein said first operating portion (210) may comprise a force input portion (112), for example a knob, in particular a cup-shaped force input portion, and wherein said locking recess (214) may be provided on said force input portion (112) such that it is open radially inwards.
Aspect F1: Mounting arrangement (100, 200) comprising
   a base (102),
   an engaging portion (152) configured to engage with an engaging section (26, 28) of a roof rack (20), for example an abutment surface (26, 28) of a T-slot (24),
   wherein said engaging portion (152) is movable relative to said base (102) in a first direction between a locking position and an unlocking position, and in a second direction different from the first direction between a release position and a clamping position.
Aspect F2: Mounting arrangement (100, 200) according to aspect F1,
   wherein said mounting arrangement (100, 200) is configured such that said engaging portion (152) is only movable from said release position to said clamping position when said engaging portion (152) is in said locking position, and/or
   wherein said mounting arrangement (200) is configured to automatically change said movement of the engaging portion (152) from said first direction to said second direction when the engaging portion (152) reaches said locking position.
Aspect F3: Mounting arrangement (100, 200) according to aspect F1 or aspect F2,
   further comprising a locking mechanism (170, 270) configured to at least lock a movement of the engaging portion (152) from the release position to the clamping position,
   wherein said locking mechanism is configured to allow said movement of said engaging portion (152) from said release position to said clamping position when said engaging portion (152) is in said locking position.
Aspect F4: Mounting arrangement (100, 200) according to aspect F3, further comprising
   a first operating portion (110, 210) supported on said base (102) and movable by a user,
   wherein said first operating portion (110, 210) is operatively coupled with said engaging portion (152) for moving said engaging portion (152) between said release position and said clamping position,
   a second operating portion (120, 220) operatively coupled with said engaging portion (152) for moving said engaging portion (152) between said locking position and said unlocking position,
   wherein said locking mechanism (170; 270) may be configured to at least lock a movement of said first operating portion (110) relative to said second operating portion (120) until said engaging portion (152) is in said locking position.
Aspect F5: Mounting arrangement (100, 200) according to one of aspects F1 to F4,
   wherein said mounting arrangement (100, 200) is configured to arrest said engaging portion (152) at least in said locking position and optionally in said unlocking position.
Aspect F6: Mounting arrangement (100) according to aspect F4 or aspect F5,
   wherein said second operating portion (120) is torque transmittingly coupled with said engaging portion (152), for example via an elongate force transfer portion (154), wherein said second operating portion (120) may comprise a non-round opening (128) in which a corresponding non-round section (156) of said elongate force transfer portion (154) is received slidable relative to said second operating portion (120) in an extension direction of said non-round opening (128).
Aspect F7: Mounting arrangement (100) according to aspect F6,
   wherein a movement of said second operating portion (120) is allowed between a first position corresponding to said unlocking position of said engaging portion (152) and a second position corresponding to said locking position of said engaging portion (152),
   wherein said first position and said second position may define end positions of a movement path of said second operating portion (120),
   wherein an angular movement region of said second operating portion (120) between said first position and said second position may be 90°.
Aspect F8: Mounting arrangement (100) according to aspect F7,
   wherein said mounting arrangement (100) may comprise a first stop portion (182) defining said first position and a second stop portion (184) defining said second position,
   wherein said first stop portion (182) and/or said second stop portion (184) may be configured to arrest said second operating portion (120) in place,
   wherein said mounting arrangement (100) may be configured such that said second operating portion (120) is automatically arrested in said first stop portion (182) and/or such that said second operating portion (120) is automatically arrested in said second stop portion (184),
   wherein said first stop portion (182) and said second stop portion (184) may comprise a recess for partially accommodating said second operating portion (120) so as to arrest said second operating portion (120) in place,
   wherein said mounting arrangement may be configured such that said second operating portion (120) is urged into the respective recess, for example by a spring or by said first operating portion (110),wherein said first stop portion (182) and said second stop portion (184) are connected by a guiding ridge (188) provided on said base (102) and configured to slidably support said second operating portion (120) when moving between said first stop portion (182) and said second stop portion (184).
Aspect F9: Mounting arrangement (100) according to one of aspects F4 to F8,
   wherein said first operating portion (110) is configured rotatable, and
   wherein said locking mechanism (170) comprises a rotation locking arrangement (172) configured to block a rotational movement of said first operating portion (110) relative to said base (102) by establishing a mechanical connection between said first operating portion (110) and said base (102).
Aspect F10: Mounting arrangement (100) according to aspect F9,
   wherein said rotation locking arrangement (172) comprises a fixation section (178) fixedly coupled to said base (102) and a locking section (174) movable between a protruding position in which said locking section (174) is engaged with a locking section receiving portion (114) on said first operating portion (110), and a retracted position in which said locking section (174) is disengaged from said locking section receiving portion (114),
   wherein said rotation locking arrangement (172) may be integrally formed as a single piece and/ or may be formed from a metal sheet, in particular by cutting and bending a metal sheet.
Aspect F11: Mounting arrangement (100) according to aspect F10,
   wherein said locking section (174) is movable from said protruding position to said retracted position by an interaction of said second operating portion (120) with said rotation locking arrangement (172),
   wherein said second operating portion (120) may be movable relative to said base (102), for example rotatable, in particular rotatable about the same axis as the first operating portion (110), between a restraining position in which said second operating portion (120) applies a pushing force on said rotation locking arrangement (172) to move said locking section (174) to said retracted position or to hold said locking section (174) in said retracted position, and an inactive position in which said second operating portion (120) allows said locking section (174) to move to said protruding position,
   wherein said second operating portion (120) comprises a lever (126) with a force application portion (122) configured to abut against a force receiving surface (176) of said rotation locking arrangement (172) to urge said locking section (174), for example under deformation of said rotation locking arrangement (172), to said retracted position,
   wherein said second operating portion (120) may comprise a gripping portion (124) configured to be grasped by a user,
   wherein said gripping portion (124) and said force application portion (122) may be provided on opposite end portions of said second operating portion (120).
Aspect F12: Mounting arrangement (100) according to one of aspects F4 to F8,
   wherein said locking mechanism (270) is configured to torque transmittingly couple said second operating portion (220) with said first operating portion (210) until said engaging portion (152) is positioned in said locking position, and to decouple said second operating portion (220) from said first operating portion (210) when said engaging portion (152) is positioned in said locking position,
   wherein said locking mechanism (270) may comprise a locking portion (272) movable between a coupling position in which a torque transmission between said second operating portion (220) and said first operating portion (210) is established, and an uncoupling position in which said torque transmission is prevented,
   wherein said locking mechanism (270) may further comprises an uncoupling portion (274) configured to effect a movement of said locking portion (272) towards said uncoupling position upon moving said engaging portion (152) to said locking position,
   wherein said uncoupling portion (274) may comprise a guiding member, for example a protrusion protruding from said base (102), wherein said guiding member is configured to be contacted by said locking portion (272) upon moving said engaging portion (152) to said locking position and to guide said locking portion (272) to said disengaging position,
   wherein said locking portion (272) may be a portion of a spring member, for example made from cutting and bending a metal sheet.
Aspect F13: Mounting arrangement (100, 200) according to one of aspects F1 to F12,
   further comprising a positioning portion **(104,** 106) arranged at a distance from said engaging portion (152) and configured for positioning said base (102) in an engaging position in which said engaging portion (152) is positioned for an engagement with said engaging section (26, 28),
   wherein said engaging portion (152) and said positioning portion (104, 106) are arranged on the same side of said base (102),
   wherein said positioning portion **(104,** 106) may be provided on a lower side of said base (102) such that said positioning portion **(104,** 106) is accessible by a user and/or may contact a side of a crossbar (22), and/or
   wherein said positioning portion **(104,** 106) may protrude from said base (102), and/or
   wherein said positioning portion (104, 106) may be arranged at a distance from said engaging portion (152) corresponding to a distance between an end of a crossbar (22), for example a front end or a rear end, and a T-slot so that said engaging portion (152) is correctly positioned with respect to said T-slot when said positioning portion (104, 106) is in contact with said crossbar (22), and/or
   wherein said base (102) is configured to be in a first direction linearly movably supportable on said object (12) to be fixed, for example configured to be linearly movably guided on said object (12), wherein said base (102) may comprise a lower surface being formed to be linearly guided on said object (12), wherein said lower surface may comprise a recess or protrusion for engaging with a corresponding portion on said object (12), and/or
   wherein said positioning portion (104, 106) is arranged spaced apart from said engaging portion (152) in said first direction, and/or
   wherein said positioning portion (104, 106) comprises a dimension allowing it to extend through said object (12) and to protrude from said object (12) on an opposite side, and/or
   wherein said mounting arrangement comprises two of said positioning portions (104, 106), a front positioning portion (104) and a rear positioning portion (106), wherein said engaging portion (152) is provided between said positioning portions (104, 106).
Aspect F14: A method of mounting a roof box to a crossbar comprising a T-rail, the method comprising the steps of:
   - providing a mounting arrangement (100) according to aspects F9-F11,
   - arranging the roof box on the crossbar,
   - arranging the engaging portion (152) in the unlocking and release position in the T-rail,
   - operating the second operating portion (120) such that the engaging portion (152) is arranged in the locking position, followed by
   - operating the first operating portion (110) such that the engaging portion (152) is arranged in the clamping position.
Aspect F15: A method of mounting a roof box to a crossbar comprising a T-rail, the method comprising the steps of:
   - providing a mounting arrangement (100) according to aspect F12,
   - arranging the roof box on the crossbar,
   - arranging the engaging portion (152) in the unlocking and release position in the T-rail, and
   - operating the first operating portion (110) such that the engaging portion (152) is arranged in the locking position and the clamping position.

### REFERENCE SIGNS

| | | | |
|---|---|---|---|
| 10 | Roof box | 170 | Locking mechanism |
| 12 | Bottom portion | 172 | Rotation locking arrangement |
| 20 | Roof rack | 174 | Locking section |
| 22 | Crossbar | 176 | Force receiving surface |
| 24 | Engaging section / T-slot | 178 | Fixation section |
| 26 | Abutment surface | 180 | Guiding portion |
| 28 | Abutment surface | 182 | First stop portion |
| 30 | Seal | 184 | Second stop portion |
| 100 | Mounting arrangement | 188 | Guiding ridge |
| 102 | Base | 200 | Mounting arrangement |
| 104 | (Front) positioning portion | 210 | Tightening member / First operating portion |
| 106 | (Rear) positioning portion | | |
| 110 | Tightening member / First operating portion | 214 | Locking recess |
| | | 220 | Second operating portion / Control portion |
| 112 | Force input portion | | |
| 113 | Force output portion | 222 | Carrier |
| 114 | Locking section receiving portion | 270 | Locking mechanism |
| 115 | Mechanical interface | 271 | Spring member |
| 116 | Force transfer nut | 272 | Locking portion |
| 117 | Spring loaded force application portion | 274 | Uncoupling portion |
| | | 275 | Control surface |
| 120 | Second operating portion | 276 | Fastener |
| 122 | Force application portion | 300 | Torque limiting arrangement |
| 124 | Gripping portion | 302 | Force transfer member / Plate spring |
| 126 | Lever | 304 | First force transfer section / Force application portion |
| 128 | Non-round opening | | |
| 150 | Clamping member | 306 | Fixation section |
| 152 | Engaging portion | 310 | End face |
| 154 | Force transfer portion | 312 | Force transfer portion |
| 156 | Second coupling section / Non-round section | 314 | Second force transfer section / Force receiving portion |
| 158 | First coupling section / Threaded portion | 316 | Cylindrical portion |
| | | 318 | Tangential protrusion |
| 160 | Stop member / cap nut | 320 | Free end portion |

## Claims

1. Mounting arrangement (100, 200) comprising
a base (102),
an engaging portion (152) configured to engage with an engaging section (26, 28) of a roof rack (20), for example an abutment surface (26, 28) of a T-slot (24),
wherein said engaging portion (152) is movable relative to said base (102) in a first direction between a locking position and an unlocking position, and in a second direction different from the first direction between a release position and a clamping position,
wherein said mounting arrangement (100, 200) may optionally comprise a first stop portion (182) defining said unlocking position and/or may comprise a second stop portion (184) defining said locking position, wherein said first stop portion (182) and/or said second stop portion (184) may be configured to arrest said engaging portion (152) in said unlocking position and/or said locking position.

2. Mounting arrangement (100, 200) according to claim 1,
wherein said mounting arrangement (100, 200) is configured such that said engaging portion (152) is only movable from said release position to said clamping position when said engaging portion (152) is in said locking position, and/or
wherein said mounting arrangement (200) is configured to automatically change said movement of the engaging portion (152) from said first direction to said second direction when the engaging portion (152) reaches said locking position.

3. Mounting arrangement (100, 200) according to claim 1 or claim 2,
further comprising a locking mechanism (170, 270) configured to at least lock a movement of the engaging portion (152) from the release position to the clamping position,
wherein said locking mechanism is configured to allow said movement of said engaging portion (152) from said release position to said clamping position when said engaging portion (152) is in said locking position.

4. Mounting arrangement (100, 200) according to claim 3, further comprising
a first operating portion (110, 210) supported on said base (102) and movable by a user,
wherein said first operating portion (110, 210) is operatively coupled with said engaging portion (152) for moving said engaging portion (152) between said release position and said clamping position,
a second operating portion (120, 220) operatively coupled with said engaging portion (152) for moving said engaging portion (152) between said locking position and said unlocking position,
wherein said locking mechanism (170; 270) may be configured to at least lock a movement of said first operating portion (110) relative to said second operating portion (120) until said engaging portion (152) is in said locking position.

5. Mounting arrangement (100, 200) according to one of claims 1 to 4,
wherein said mounting arrangement (100, 200) is configured to arrest said engaging portion (152) at least in said locking position and optionally in said unlocking position.

6. Mounting arrangement (100) according to claim 4 or claim 5,
wherein said second operating portion (120) is torque transmittingly coupled with said engaging portion (152), for example via an elongate force transfer portion (154), wherein said second operating portion (120) may comprise a non-round opening (128) in which a corresponding non-round section (156) of said elongate force transfer portion (154) is received slidable relative to said second operating portion (120) in an extension direction of said non-round opening (128).

7. Mounting arrangement (100) according to claim 6,
wherein a movement of said second operating portion (120) is allowed between a first position corresponding to said unlocking position of said engaging portion (152) and a second position corresponding to said locking position of said engaging portion (152),
wherein said first position and said second position may define end positions of a movement path of said second operating portion (120),
wherein an angular movement region of said second operating portion (120) between said first position and said second position may be 90°.

8. Mounting arrangement (100) according to claim 7,
wherein said mounting arrangement (100) may comprise a first stop portion (182) defining said first position and a second stop portion (184) defining said second position,
wherein said first stop portion (182) and/or said second stop portion (184) may be configured to arrest said second operating portion (120) in place,
wherein said mounting arrangement (100) may be configured such that said second operating portion (120) is automatically arrested in said first stop portion (182) and/or such that said second operating portion (120) is automatically arrested in said second stop portion (184),
wherein said first stop portion (182) and said second stop portion (184) may comprise a recess for partially accommodating said second operating portion (120) so as to arrest said second operating portion (120) in place,
wherein said mounting arrangement may be configured such that said second operating portion (120) is urged into the respective recess, for example by a spring or by said first operating portion (110),wherein said first stop portion (182) and said second stop portion (184) are connected by a guiding ridge (188) provided on said base (102) and configured to slidably support said second operating portion (120) when moving between said first stop portion (182) and said second stop portion (184).

9. Mounting arrangement (100) according to one of claims 4 to 8,
wherein said first operating portion (110) is configured rotatable, and
wherein said locking mechanism (170) comprises a rotation locking arrangement (172) configured to block a rotational movement of said first operating portion (110) relative to said base (102) by establishing a mechanical connection between said first operating portion (110) and said base (102).

10. Mounting arrangement (100) according to claim 9,
wherein said rotation locking arrangement (172) comprises a fixation section (178) fixedly coupled to said base (102) and a locking section (174) movable between a protruding position in which said locking section (174) is engaged with a locking section receiving portion (114) on said first operating portion (110), and a retracted position in which said locking section (174) is disengaged from said locking section receiving portion (114),
wherein said rotation locking arrangement (172) may be integrally formed as a single piece and/ or may be formed from a metal sheet, in particular by cutting and bending a metal sheet.

11. Mounting arrangement (100) according to claim 10,
wherein said locking section (174) is movable from said protruding position to said retracted position by an interaction of said second operating portion (120) with said rotation locking arrangement (172),
wherein said second operating portion (120) may be movable relative to said base (102), for example rotatable, in particular rotatable about the same axis as the first operating portion (110), between a restraining position in which said second operating portion (120) applies a pushing force on said rotation locking arrangement (172) to move said locking section (174) to said retracted position or to hold said locking section (174) in said retracted position, and an inactive position in which said second operating portion (120) allows said locking section (174) to move to said protruding position,
wherein said second operating portion (120) comprises a lever (126) with a force application portion (122) configured to abut against a force receiving surface (176) of said rotation locking arrangement (172) to urge said locking section (174), for example under deformation of said rotation locking arrangement (172), to said retracted position,
wherein said second operating portion (120) may comprise a gripping portion (124) configured to be grasped by a user,
wherein said gripping portion (124) and said force application portion (122) may be provided on opposite end portions of said second operating portion (120).

12. Mounting arrangement (100) according to one of claims 4 to 8,
wherein said locking mechanism (270) is configured to torque transmittingly couple said second operating portion (220) with said first operating portion (210) until said engaging portion (152) is positioned in said locking position, and to decouple said second operating portion (220) from said first operating portion (210) when said engaging portion (152) is positioned in said locking position,
wherein said locking mechanism (270) may comprise a locking portion (272) movable between a coupling position in which a torque transmission between said second operating portion (220) and said first operating portion (210) is established, and an uncoupling position in which said torque transmission is prevented,
wherein said locking mechanism (270) may further comprises an uncoupling portion (274) configured to effect a movement of said locking portion (272) towards said uncoupling position upon moving said engaging portion (152) to said locking position,
wherein said uncoupling portion (274) may comprise a guiding member, for example a protrusion protruding from said base (102), wherein said guiding member is configured to be contacted by said locking portion (272) upon moving said engaging portion (152) to said locking position and to guide said locking portion (272) to said disengaging position,
wherein said locking portion (272) may be a portion of a spring member, for example made from cutting and bending a metal sheet.

13. Mounting arrangement (100, 200) according to one of the preceding claims,
further comprising a positioning portion (104, 106) arranged at a distance from said engaging portion (152) and configured for positioning said base (102) in an engaging position in which said engaging portion (152) is positioned for an engagement with said engaging section (26, 28),
wherein said engaging portion (152) and said positioning portion (104, 106) are arranged on the same side of said base (102),
wherein said positioning portion (104, 106) may be provided on a lower side of said base (102) such that said positioning portion (104, 106) is accessible by a user and/or may contact a side of a crossbar (22), and/or
wherein said positioning portion (104, 106) may protrude from said base (102), and/or
wherein said positioning portion (104, 106) may be arranged at a distance from said engaging portion (152) corresponding to a distance between an end of a crossbar (22), for example a front end or a rear end, and a T-slot so that said engaging portion (152) is correctly positioned with respect to said T-slot when said positioning portion (104, 106) is in contact with said crossbar (22), and/or
wherein said base (102) is configured to be in a first direction linearly movably supportable on said object (12) to be fixed, for example configured to be linearly movably guided on said object (12), wherein said base (102) may comprise a lower surface being formed to be linearly guided on said object (12), wherein said lower surface may comprise a recess or protrusion for engaging with a corresponding portion on said object (12), and/or
wherein said positioning portion (104, 106) is arranged spaced apart from said engaging portion (152) in said first direction, and/or
wherein said positioning portion (104, 106) comprises a dimension allowing it to extend through said object (12) and to protrude from said object (12) on an opposite side, and/or
wherein said mounting arrangement comprises two of said positioning portions (104, 106), a front positioning portion (104) and a rear positioning portion (106), wherein said engaging portion (152) is provided between said positioning portions (104, 106).

14. A method of mounting a roof box to a crossbar comprising a T-rail, the method comprising the steps of:
- providing a mounting arrangement (100) according to claims 9-11,
- arranging the roof box on the crossbar,
- arranging the engaging portion (152) in the unlocking and release position in the T-rail,
- operating the second operating portion (120) such that the engaging portion (152) is arranged in the locking position, followed by
- operating the first operating portion (110) such that the engaging portion (152) is arranged in the clamping position.

15. A method of mounting a roof box to a crossbar comprising a T-rail, the method comprising the steps of:
- providing a mounting arrangement (100) according to claim 12,
- arranging the roof box on the crossbar,
- arranging the engaging portion (152) in the unlocking and release position in the T-rail, and
- operating the first operating portion (110) such that the engaging portion (152) is arranged in the locking position and the clamping position.
